# EUROPEAN PATENT SPECIFICATION

(11) **EP 4 438 987 B1**
(45) Date of publication and mention of the grant of the patent: **10.09.2025**
(21) Application number: 23164320.6
(22) Date of filing: 27.03.2023
(51) Int. Cl.: F28D 20/02

(54) **THERMAL ENERGY STORAGE DEVICE AND SYSTEM**
WÄRMEENERGIESPEICHERVORRICHTUNG UND -SYSTEM
DISPOSITIF ET SYSTÈME DE STOCKAGE D'ÉNERGIE THERMIQUE

(43) Date of publication of application: 02.10.2024
(73) Proprietor: Mitsubishi Electric R&D Centre Europe B.V., Livingston EH54 5DJ (GB); MITSUBISHI ELECTRIC CORPORATION, Chiyoda-ku Tokyo 100-8310 (JP)
(72) Inventor: OLKIS, Christopher, Livingston (GB); KAWALEY, Georgeanna, Livingston (GB)
(74) Representative: Pfenning, Meinig & Partner mbB

(56) References cited:
- DE-A1- 3 821 358
- JP-A- 2005 140 390
- US-A- 3 960 207

## Description

A thermal energy storage device (TES) and a system is provided. The TES comprises a tank having internal space and at least one first opening, and at least one container, wherein the at least one container at least has an obverse wall, a reverse wall and an internal space, wherein the internal space of the at least one container contains a phase change material (PCM), and wherein the obverse wall and/or reverse wall of the at least one container has a substantially planar surface, wherein the substantially planar surface extends from a cross-sectional centre of the at least one container to at least one internal wall of the internal space of the tank, wherein the at least one container is arranged in the internal space of the tank to define a flow path for a fluid in the internal space of the tank, characterized in that the flow path allows a fluid to flow from the at least one opening of the tank at least partially over a surface of the obverse wall of the at least one container and then at least partially over a surface of the reverse wall of the at least one container.

Current domestic hot water cylinders store all thermal energy as sensible heat. In addition, they are designed to make use of the density difference between cold and hot water, which creates a stratification zone within the tank. During domestic hot water discharges, a minimum of mixing occurs within the tank. Hence, the bottom part of the cylinder remains at cold mains inlet temperature (e.g. 10°C) and changes within the narrow stratification zone to the discharge temperature (e.g. 50°C). Thus, a 200L cylinder can discharge 200L of domestic hot water.

Phase change materials have been proposed as an alternative thermal energy storage means, where the energy is largely stored as heat of fusion within a small temperature range. Two types of phase change material thermal energy storage have been proposed. In a first type, the phase change material (PCM) is encapsulated and in the second type, the PCM is not encapsulated. In encapsulated PCM, the PCM is contained by a thin layer of encapsulation material (e.g. plastic or metal). A large number of PCM capsules are then filled into an existing cylinder for domestic hot water (DHW) to enhance its thermal energy storage capacity. The PCM are often intended as retrofits, where they are inserted one by one through a port in the empty DHW cylinder. After filling the cylinder with water, water takes up the voids between the capsules. In non-encapsulated PCM, an outer vessel is filled with PCM and a heat exchanger is submerged into it to extract heat. This design requires a very sophisticated, costly heat exchanger design to extract heat from the bulk of the non-encapsulated PCM.

US 3,960,207 A discloses a thermal energy storage device comprising a tank containing a plurality of hollow, disc-like containers, which are each filled with a thermal energy storage material and placed in a stacked array. Each of the disc-like containers has a hole in the center. A fluid such as air is directed radially inward into the container and is exhausted through the central holes of the disc-like containers which together form a conduit. The flow path of fluid extracts heat from the discs equivalent in a parallel (i.e. non-sequential) manner which leads to constant air outlet temperature for a certain period of time during discharge, but to a sharp drop in temperature after said period of time. Moreover, the thermal energy storage device does not allow for stratification by using different PCM melting temperatures and does not allow simultaneous charging and discharging.

JP 2005 140390 A discloses a device which comprises an outer cylinder for composing the outer periphery surface of a heat exchange cell, a container for accommodating a latent heat storing member arranged inside the outer cylinder, a heating medium which can be circulated from the upper portion to the lower portion of the outer cylinder, wherein heat is radiated or stored by utilizing the phase transformation of the latent heat storing member.

DE 38 21 358 A1 discloses a device comprising a heat exchanger equipped with flat heat stores arranged one above another, wherein profiled plates are provided in the interspaces between mutually adjacent heat stores, wherein the profiled plates deflect a flow in radial directions and form, on their two sides, crisscrossing flow ducts which are connected only in the center of the profiled plates via an opening therein.

In view of the prior art, it was the object of the present invention to provide a thermal energy storage device and a system which does not have at least one of the disadvantages of the prior art. Preferably, the thermal energy storage device should allow high heat transfer rates at high safety and low costs and/or a steady temperature decrease during discharge at low costs. More preferably, the thermal energy storage device should further have a high heat capacity, allow stratification by using different PCM melting temperatures and/or a simultaneous charging and discharging.

The object is solved by the thermal energy storage device having the features of claim 1 and the system having the features of claim 11. The dependent claims show advantageous embodiments thereof.

According to the invention, a thermal energy storage device (TES) is provided, comprising
a) a tank having internal space and at least one first opening (e.g. an inlet);
b) at least one container and at least one further container, wherein each of the at least two containers at least has an obverse wall, a reverse wall and an internal space, wherein the internal space of each of the at least two containers contains a phase change material (PCM), and wherein the obverse wall and/or reverse wall of the at least one container has a substantially planar surface, wherein the substantially planar surface extends from a cross-sectional centre of the at least one container to at least one internal wall of the internal space of the tank;

wherein the at least two containers are arranged in the internal space of the tank above each other to form a stack to define a flow path for a fluid in the internal space of the tank;
wherein the flow path allows a fluid to flow from the at least one first opening of the tank at least partially over a surface of the obverse wall of the at least one container, then at least partially over a surface of the reverse wall of the at least one container, then, one further container in the stack after the other, at least partially over a surface of the obverse wall and then at least partially over a surface of the reverse wall of each further container in the stack,
wherein the at least two containers are arranged in at least two zones in the internal space of the tank,
characterized in that the at least two containers comprise a phase change material which has a melting point which is different between the zones.

The term "substantially planar" can include being flat to being contoured, having one or more interruptions (such as a texture), having a hole and having a recess.

Since the arrangement of the at least one container in the tank creates a flow path in the tank which allows a fluid to flow from the at least one opening of the tank at least partially over a surface of the obverse wall of the at least one container and then at least partially over a surface of the reverse wall of the at least one container, the TES allows high heat transfer rates because the contact to the container surface is maximized and a directional flow along the container surface is ensured. Since the container is relatively large (extension from a cross-sectional centre of the at least one container to at least one internal wall of the internal space of the tank), this advantage is achieved at higher safety and lower costs compared to a plurality of smaller containers of an equal volume. In fact, with a plurality of containers, manufacturing costs of the TES and the risk of a container failure and a leakage of PCM into the tank would be significantly higher. Furthermore, since the at least one container defines a specific flow path within the tank, a steady temperature decrease during discharge is achieved at low costs, i.e. sharp decreases in temperature of outflowing water are prevented.

According to the invention, the thermal energy storage device (TES) comprises at least two, preferably at least 20, more preferably at least 30, even more preferably at least 40, optionally at least 50, containers. The advantage of having more containers is that the energy capacity of the TES can be increased while keeping a total surface for contact of fluid with the surface of the containers high, i.e. while maintaining a high high heat transfer rate. However, the total amount of containers in the tank should not be too high to prevent a rising risk of container failure. Preferably, the maximum amount of containers is 100, more preferably 50.

Each of the containers has at least an obverse wall, a reverse wall and an internal space, wherein the internal space of each of the containers contains a phase change material. The containers are arranged in the internal space of the tank above each other in a stack to define a flow path for a fluid in the internal space of the tank. The flow path allows a fluid to flow from the at least one opening of the tank at least partially over a surface of the obverse wall of the at least one (first) container, then at least partially over a surface of the reverse wall of the at least one (first) container, then, one further container in the stack after the other, at least partially over a surface of the obverse wall and then at least partially over a surface of the reverse wall of each further container in the stack. This configuration of the TES can create a kind of meandering fluid flow path from the at least one first opening of the tank (inlet) to at least one further opening of the tank (outlet), wherein fluid flowing along the flow path contacts surfaces of each container in a sequential (i.e. non-parallel) manner. Thus, a fluid (e.g. water) flowing along the flow path is gradually heated as it flows along the surfaces of the containers.

In a preferred embodiment, the TES comprises at least one spacer, preferably at least two spacers, more preferably at least four spacers, even more preferably at least six spacers, especially at least eight spacers, between each neighbouring pairs of containers to provide at least one first part of the flow path for a fluid between each neighbouring pairs of containers. The first part of the flow path is a part of the flow path which is located between two neighbouring pairs of containers and which allows a contact of the fluid with surfaces of two neighbouring containers.

The at least one spacer (preferably all spacers) provide(s) an at least regionally nonlinear, preferably at least regionally circular, at least one first part of the flow path. This has the advantage that the flow path is prolonged compared to a (strictly) linear flow path, which gives the fluid more time for exchanging heat with the surfaces of two neighbouring containers. In short, the heat transfer rate is increased compared to a (strictly) linear flow path.

The at least one spacer (optionally all spacers) can be realized as a baffle, preferably as a spiral. The stack of containers containing a PCM in combination with at least one baffle determines the flow path of the water inside the tank. Thus, the PCM stratified configuration is different from the stratification of known DHW cylinder units in which the difference in densities of cold and hot water causes the formation of two layers, where the cold-water layer is at the bottom and the hot water layer is on top of it and in which the two layers are separated by a narrow stratification zone in which the temperature changes from cold to hot within a very narrow space.

Furthermore, the at least one spacer (optionally all spacers) can comprise perforated sections. The perforated sections have the advantage that the flow of fluid along the flow path is improved and a risk of a formation of no-flow zones can be avoided.

Moreover, the at least one spacer (optionally all spacers) can be connected to the at least one internal wall of the internal space of the tank. This has the advantage that an assembly of the TES is facilitated and a possibility of an incorrect assembly is ruled out.

If the TES comprises at least two containers, a first of the at least two containers can comprise at least one hole or at least one recess, and a second of the at least two containers comprises at least one hole or at least one recess, wherein the at least one hole or recess of the first of the at least two containers and the at least one hole or recess of the second of the at least two containers each provide at least one second part of the flow path for a fluid. The second part of the flow path is a part of the flow path which goes through each container (without contacting the internal space of each container) and which allows a contact of the fluid with surfaces of each container (i.e. the walls of each container lining the hole and/or recess of each container).

The first and second of the at least two containers are preferably neighbouring containers in the internal space of the tank. Preferably, the first of the at least two containers is located closer to the at least one first opening of the tank than the second of the at least two containers.

Moreover, it is preferred that the at least one second part of the flow path for a fluid is essentially perpendicular to the at least one first part of the flow path for a fluid.

Furthermore, the at least one hole of the first of the at least two containers can be an eccentric hole and/or the at least one hole of the second of the at least two containers can be an eccentric hole. Preferably, the at least one hole or recess of the first of the at least two containers and the at least one hole or recess of the second of the at least two containers are offset to each other in a direction perpendicular to the elongation of each of the at least one hole or recess through each of the at least two containers (i.e. in a direction perpendicular to a stacking direction of the at least two containers), preferably offset by at least half a length of each of the at least two containers in said direction. This extends the fluid path (specifically: the first part of the fluid path) and increases the heat transfer rate.

The at least one hole of the first of the at least two containers can be located at a cross-sectional centre of the first of the at least two containers and the at least one hole or recess of the second of the at least two containers can be located at an edge region of the second of the at least two containers. This extends the fluid path (specifically: the first part of the fluid path) and increases the heat transfer rate. Preferably, the second of the at least two containers comprises at least two, preferably at least four, more preferably at least six, even more preferably at least eight, holes or recesses located at an edge region of the second of the at least two containers, wherein each pair of the at least two holes or recesses is preferably located at opposing ends of the second of the at least two containers. This can increase the surface of the at least two containers over which the fluid is forced to flow along the fluid path of the tank, which can increase the heat transfer rate.

Moreover, the at least one hole of the second of the at least two containers can be located at a cross-sectional centre of the first of the at least two containers and the at least one hole or recess of the first of the at least two containers can be located at an edge region of the first of the at least two containers. This extends the fluid path (specifically: the first part of the fluid path) and increases the heat transfer rate. Preferably, the first of the at least two containers comprises at least two, preferably at least four, more preferably at least six, even more preferably at least eight, holes or recesses located at an edge region of the second of the at least two containers, wherein each pair of the at least two recesses or holes is preferably located at opposing ends of the first of the at least two containers. This can increase the surface of the at least two containers over which the fluid is forced to flow along the fluid path of the tank, which can increase the heat transfer rate.

Furthermore, the at least one recess of the first of the at least two containers can be located at an edge region of the first of the at least two containers and the at least one recess of the second of the at least two containers can be located at an edge region of the second of the at least two containers, wherein the at least one recess of the first of the at least two containers and the at least one recess of the second of the at least two containers are located at opposing ends of the internal space of the tank. This extends the fluid path (specifically: the first part of the fluid path) and increases the heat transfer rate.

The at least two containers, preferably at least 20, more preferably at least 30, even more preferably at least 40, optionally at least 50, containers are arranged in at least two zones, preferably at least three zones, more preferably at least four zones, in the internal space of the tank. This allows to equip the containers with different phase change materials (PCM) in each zone of the tank. According to the invention, the containers comprise a PCM which has a melting point which is different between the zones. More preferably, the containers comprise a PCM which zonally increases in melting temperature or zonally decreases in melting temperature in an axial direction of the tank. For example, the melting temperature of the PCM in each zone can increase from a bottom of the tank to a top of the tank. This arrangement leads to a PCM-stratified configuration and can achieve a higher efficiency during charging, e.g. by a heat pump which is connected to the TES. It also allows simultaneous charging and discharging and/or heat pump assisted discharging. The arrangement in different zones further enables separate charging of the different zones, which can be beneficial for heat pump efficiency.

The at least one container, optionally all containers, of the tank can have a height in the range of 5 to 50 mm, wherein the height refers to a maximum dimension of the container from its obverse wall to its reverse wall.

Moreover, the at least one container, optionally all containers, of the tank can have a length and width in the range of 80% to 100% of a length and width of a cross-section of the internal space of the tank. Preferably, the at least one container, optionally all containers, of the tank have a length which is 100% the length and width of a cross-section of the internal space of the tank, i.e. it is preferable that the at least one container, optionally all containers, contact the wall of the tank which defines the internal space of the tank. This implies that there is no gap between the at least one container (preferably all containers) and the wall of the tank which defines the internal space of the tank. The advantage is that the heat capacity of the tank is maximised and a fluid flow along said wall of the tank, which could lower the heat transfer rate, is prevented, i.e. a maximum heat transfer rate can be ensured. Possible heat losses to the tank wall are also prevented.

Furthermore, the at least one container, optionally all containers, of the tank can have an essentially circular cross-section, an essentially elliptical cross-section, an essentially triangular cross-section or an essentially rectangular cross-section, wherein the term "essentially" encompasses cross-sections regionally deviating from the mentioned cross-sections. Ideally, the cross-section of the at least one container, optionally all containers, of the tank matches the cross-section of the internal space of the tank.

Besides, the at least one container, optionally all containers, of the tank can have a substantially planar, preferably planar, obverse wall surface and reverse wall surface, wherein the term "substantially planar" includes a flat shape, a contoured shape, a locally interrupted shape and a shape with a hole. The advantage is that the flow path for fluid within the tank is as long as possible and a more stable stacking of at least two containers can be realized.

Apart from the above, the at least one container, optionally all containers, of the tank can comprise a material selected from the group consisting of metal, plastic and combinations thereof, wherein preferably, the obverse wall and/or the reverse wall, optionally also at least one side wall of the container, comprise or consist of a material selected from the group consisting of metal, plastic and combinations thereof. If the material is plastic, it is preferred that the plastic has a low wall thickness and a high heat conductivity.

The at least one container, optionally all containers of the tank, can occupy a volume the range of 60 to 95%, preferably in the range of 80 to 90%, of the total volume of the internal space of the tank. Said ranges depict an optimum range between maximum heat capacity on the one hand (caused by the occupied volume) and a maximum heat transfer rate on the other hand (caused by the volume of the fluid path, i.e. the unoccupied volume).

The tank can comprise at least one second opening (e.g. an outlet), preferably in a location opposite to the at least one first opening. In a further preferred embodiment, the at least one opening is an Inlet for mains water and the tank comprises at least one second opening which is an outlet for hot water. The at least one first opening can be located at the bottom of the tank and the at least one second opening can be located at the top of the tank.

Furthermore, the tank can comprise at least one third opening, preferably located in at least one side wall of the tank, more preferably in a region of the at least one side wall of the tank closer to the at least one first opening of the tank than at least one second opening of the tank. The third opening can establish a fluid connection to a heating circuit (comprising e.g. a heat pump) for charging the TES (with heat energy).

Moreover, the tank can comprise at least one fourth opening, preferably located in at least one side wall of the tank, more preferably in a region of the at least one side wall of the tank further away from the at least one first opening of the tank than at least one second opening of the tank. The third opening can establish a fluid connection to a heating circuit (comprising e.g. a heat pump) for charging the TES (with heat energy).

In addition, the tank can comprise at least one fifth opening, preferably in at least one side wall of the tank, more preferably in a region of the at least one side wall of the tank which has a substantially equal distance to the at least one first opening of the tank and at least one second opening of the tank. The third opening can establish a fluid connection to a heating circuit (comprising e.g. a heat pump) for charging the TES (with heat energy).

The at least one third opening, at least one fourth opening and/or at least one fifth opening can allow charging of the PCM within the tank of the TES.

In a preferred embodiment, the internal space of the tank does not comprise any pipes. In fact, pipe arrangements within the internal space of the tank, which some TES according to the prior art comprise to minimise mixing of water during charging and discharging to achieve a strong stratification zone, are not needed in the TES according to the invention. The advantage is that the TES according to the invention can be provided in an easier and less expensive manner and can have a higher heat capacity because no space in the internal space of the tank is lost to pipe arrangements.

The wall of the tank can be thermally insulated. The advantage is that heat losses to the environment are minimized.

In a preferred embodiment, the thermal energy storage device comprises a state of charge (SOC) monitoring system. The SOC monitoring system can be configured to detect a temperature, pressure, conductivity and/or enthalpy (preferably a temperature) of the internal space of the tank of the thermal energy storage device. For example, the SOC monitoring system can be configured to detect
i) a surface temperature of the at least one container (optionally all containers); and/or
ii) a temperature of a fluid exiting the tank of the thermal energy storage device (e.g. exiting a second opening thereof) or a temperature of a fluid flowing through the flow path of the tank; and/or
iii) a temperature if the phase change material in the at least one container (optionally all containers), e.g. if the container(s) is/are in direct contact with the wall of the tank. To this end, a temperature sensor can be fixed in the internal space of the container(s).

The SOC monitoring system can further be configured to convert a detected parameter (e.g. a detected temperature) to a state of charge. The conversion can be based on a temperature-SOC calibration correlation that was initially determined for the tank design from an enthalpy-SOC analysis.

According to the invention, a system is provided which comprises
a) a thermal energy storage device according to the invention;
b) a mains water connection which is thermally connected to the internal space of the tank of the thermal energy storage device;
c) a heating circuit for charging the thermal energy storage device (with heat energy), wherein the heating circuit is thermally connected to the internal space of the tank of the thermal energy storage device.

In the system, the mains water connection is preferably fluidly connected to the first opening of the tank of the thermal energy storage device and the heating circuit is preferably connected to the internal space of the tank of the thermal energy storage device by a heat exchanger. Alternatively, the mains water connection is preferably connected to the internal space of the tank of the thermal energy storage device by a heat exchanger and the heating circuit is preferably fluidly connected to at least one opening of the tank of the thermal energy storage device, i.e. the tank of the thermal energy storage device is directly connected to the heating circuit (and DHW is extracted with a heat exchanger, e.g. Ecocute tank design). The advantage of both alternatives is that the heating circuit is fluidly separated from the flow path for fluid within the TES so that potable water cannot come into contact with fluid flowing through the heating circuit.

In the system, the phase change material of the at least one container can have a melting temperature in the range of 30 to <100°C wherein the thermal energy storage device is configured to provide heat to the heating circuit and is preferably located completely underground.

Furthermore, in the system, the phase change material of the at least one container can have a melting temperature in the range of ≥100 °C, wherein the thermal energy storage device is configured to provide water in the form of steam.

The system can comprise a further thermal energy storage device according to the invention.

The tank of the further thermal energy storage device can comprise a mains water connection which is thermally connected to the tank of the further thermal energy storage device, wherein the heating circuit is thermally connected to the tank of the further thermal energy storage device. In the system, the mains water connection is preferably fluidly connected to the first opening of the tank of the further thermal energy storage device and the heating circuit is preferably connected to the internal space of the tank of the further thermal energy storage device by a heat exchanger. Alternatively, the mains water connection is preferably connected to the internal space of the tank of the further thermal energy storage device by a heat exchanger and the heating circuit is preferably fluidly connected to at least one opening of the tank of the further thermal energy storage device, i.e. the tank of the further thermal energy storage device is directly connected to the heating circuit (and DHW is extracted with a heat exchanger, e.g. Ecocute tank design).

Moreover, the tank of the further thermal energy storage device can comprise a phase change material in the at least one container which has a melting temperature which is different to the melting temperature of the at least one container of the (first) thermal energy storage device.

Furthermore, the tank of the further thermal energy storage device can comprise a phase change material in the at least one container which has a melting temperature in the range of 30 to <100°C, wherein the further thermal energy storage device is configured to provide heat to the heating circuit and is preferably located completely underground.

Besides, the tank of the at least one further thermal energy storage device can comprise a phase change material in the at least one container which has a melting temperature in the range of ≥100 °C, wherein the further thermal energy storage device is configured to provide water in the form of steam.

The system can be configured to operate the thermal energy storage device and the further thermal energy storage device in a semi-continuous operation mode in which one of the thermal energy storage device and further thermal energy storage device is charged and the other one of the thermal energy storage device and further thermal energy storage device is discharged, wherein the system preferably comprises a controller which is configured to control the semi-continuous operation mode.

The heating circuit of the system can comprise a heat source which is selected from the group consisting of heat pump, solar thermal heater, gas boiler, industrial waste heat source and combinations thereof.

With reference to the following figures, the subject according to the invention is intended to be explained in more detail without wishing to restrict said subject to the special embodiments shown here.

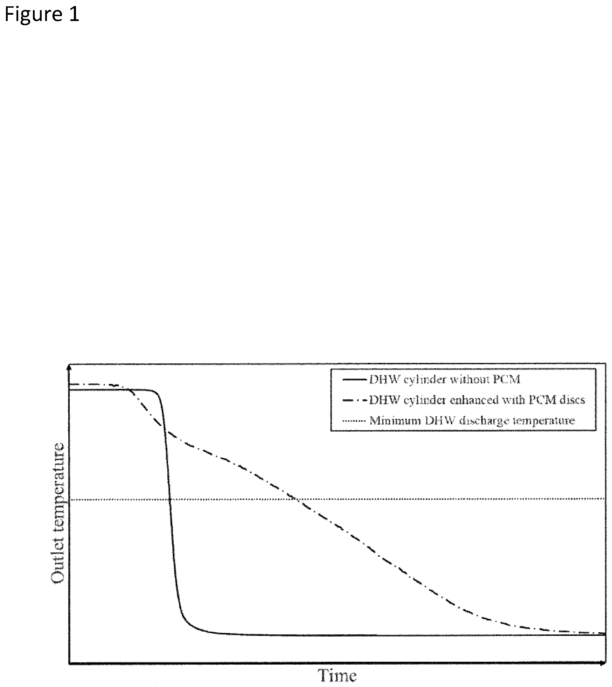

Figure 1 shows how the PCM discs affect the domestic hot water discharge temperature profile. The discharge profiles shown here depict the same flow rates in both cases. Traditional DHW cylinders feature a thermocline during discharge due to stratification based on density differences between cold mains water at the bottom inlet of the cylinder and hot water at the top of the cylinder. This thermocline leads to a discharge profile in the shape of a sigmoid curve. Thus, traditional cylinder discharge water above the minimum temperature until the thermocline reaches the top of the cylinder causing the temperature to drop below the minimum temperature within a short period of time. Minimum DHW discharge temperatures are defined in standards such as EN 16147. The thermal energy storage device according to the invention comprising PCM discs does not rely on stratification from temperature-based density differences between hot and cold water. Instead, cold mains water is heated gradually as it flows along a fixed flow-path over the PCM discs. As the discs discharge their energy to the water, the outlet temperature is slowly reduced, which leads to a steadier decrease of temperature over time. Thus, water is discharged above the minimum temperature limit for a longer period of time resulting in a larger DHW discharge volume.

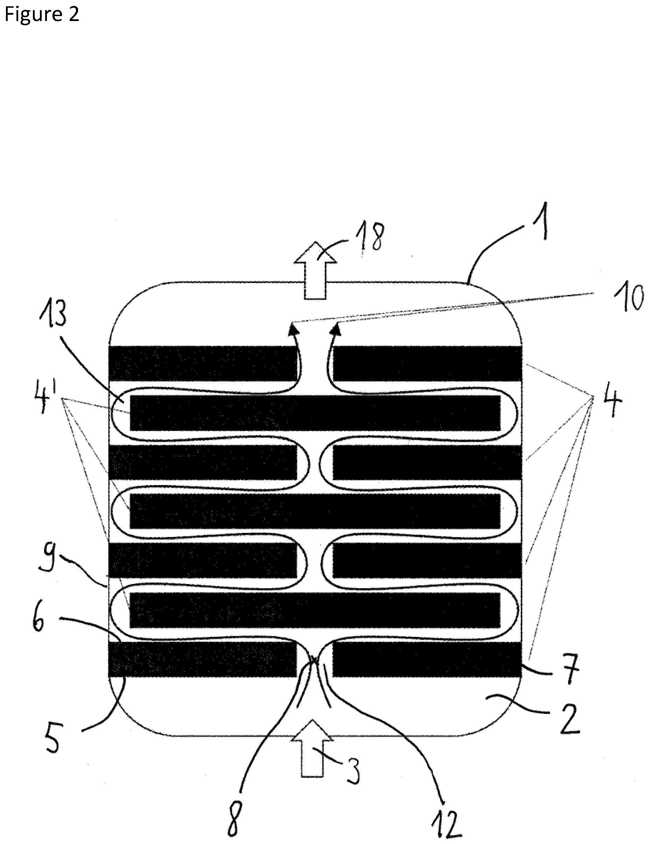

Figure 2 schematically shows a thermal energy storage device according to the invention. The thermal energy storage device comprises a tank 1 having internal space 2 and at least one first opening 3, and, in this embodiment, 7 containers 4, 4', wherein each container 4, 4' at least has an obverse wall 5, a reverse wall 6 and an internal space 7, wherein the internal space 7 of each container 4 contains a phase change material, and wherein the obverse wall 5 and reverse wall 6 of the at least one container has a substantially planar surface, wherein the substantially planar surface extends from a cross-sectional centre 8 of each container 4, 4' to at least one internal wall 7 of the internal space 2 of the tank 1. Each container 4, 4' is arranged in the internal space 2 of the tank 1 to define a flow path 10 for a fluid in the internal space 7 of the tank 1. The flow path 10 allows a fluid to flow from the at least one first opening 3 of the tank 1 at least partially over a surface of the obverse wall 5 of each container 4, 4' and then at least partially over a surface of the reverse wall 6 of each container 4, 4'. Here, the containers 4, 4' discs are separated by baffles (not shown). Cold mains water enters the tank 1 from the bottom of the tank at the first opening 3 and follows a pre-determined flow path over the entire surface area of the containers 4, 4'. The containers 4, 4' discharge thermal energy to the cold mains water and gradually heat the water until hot water (DHW) leaves the tank from the top at a second opening 18 of the tank 1. In another embodiment, it is possible to reverse the flow of water and heat cold mains water from top to bottom. In this example, a first type of containers 4 has a larger diameter than a second type of containers 4', but both types of containers 4, 4' can also have the same diameter.

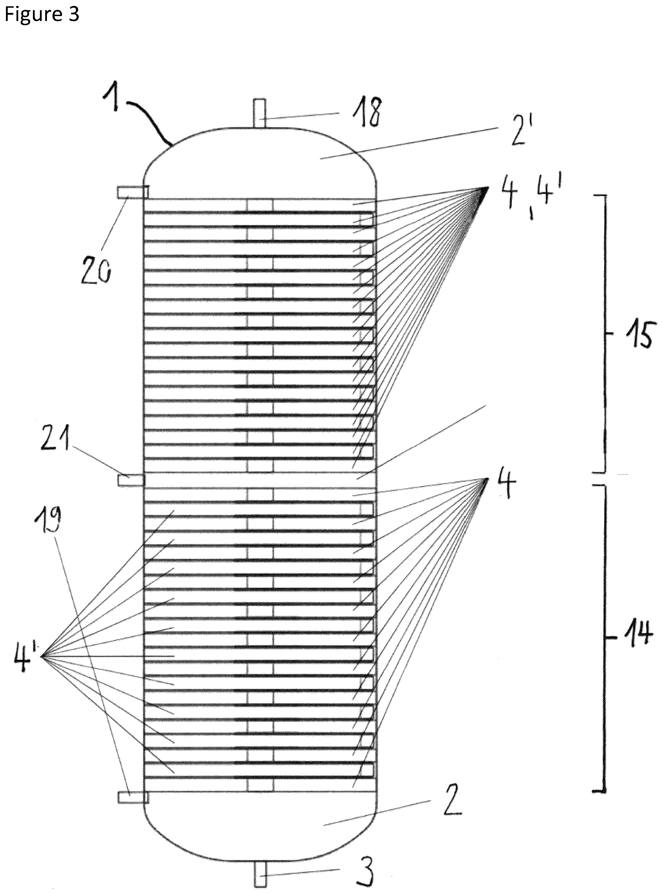

Figure 3 schematically shows a cross-sectional view of a thermal energy storage device according to the invention containing containers 4, 4' of two types in alternating arrangement and arranged in a first zone 14 and in a second zone 15. In this embodiment, the tank 1 has at least one third opening 19, at least one fourth opening 20 and at least one fifth opening 21 to connect the tank 1 to a heating circuit (not shown).

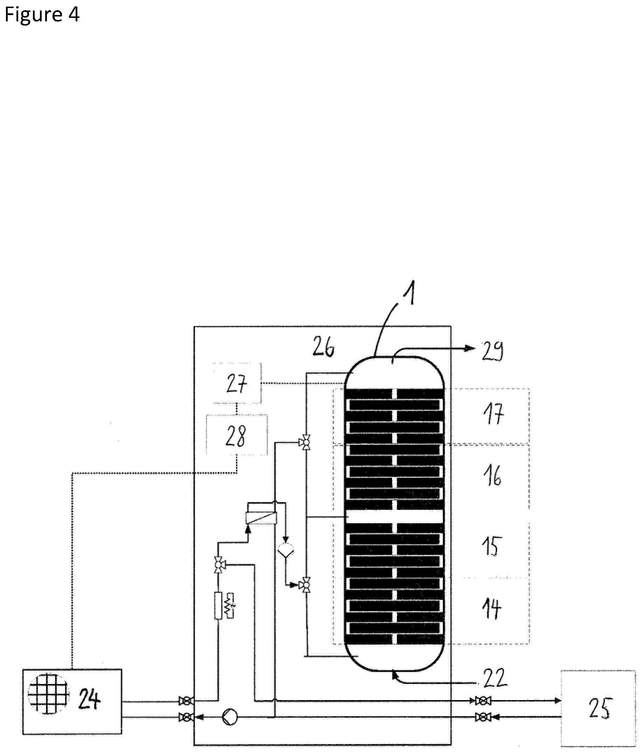

Figure 4 schematically shows a thermal energy storage device according to the invention being part of a system according to the present invention. Here, the tank 1 is connected to a mains water connection 22 at its bottom and to a DHW outlet at its top. The PCM of the thermal energy storage device are split into a first zone 14, a second zone 15, a third zone 16 and a fourth zone 17, wherein the zones 14, 15, 16, 17 have containers containing PCM with melting temperatures that are different between the zones 14, 15, 16, 17, which are split into two charging sections. The first zone is comprised of zones 14 and 15, while the second zone is comprised of zones 16 and 17. The two charging sections can be charged separately from the heat pump 24 which allows charging of the first section at higher heat pump efficiency, while the section is still available to provide domestic hot water. Furthermore, the system is comprised of a heating circuit 25 directly connected to the heat pump 24. The system further comprises a state of charger analyser 27 and a controller 28.

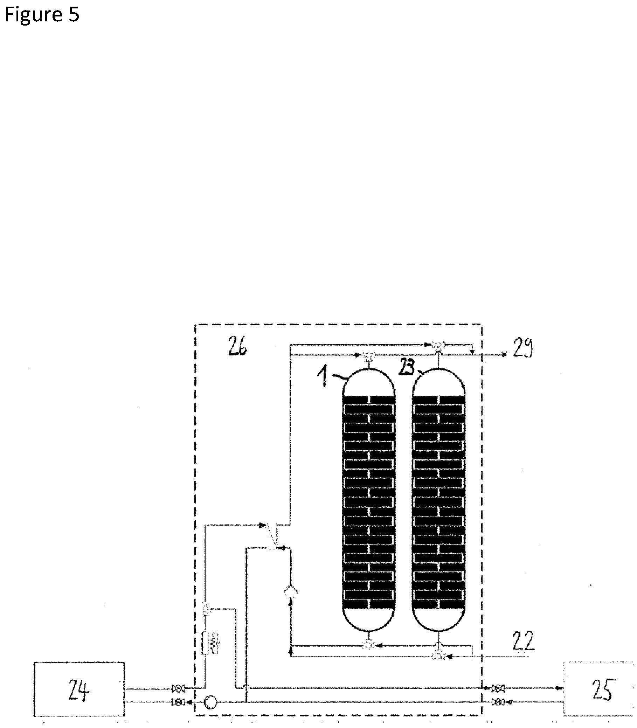

Figure 5 schematically shows a system according to the present invention. Here, the system comprises a first tank 1 of a thermal energy storage device according to the invention and a second tank 23 of a further thermal energy storage device according to the invention. The two tanks 1, 23 can be charged and discharged separately or simultaneously.

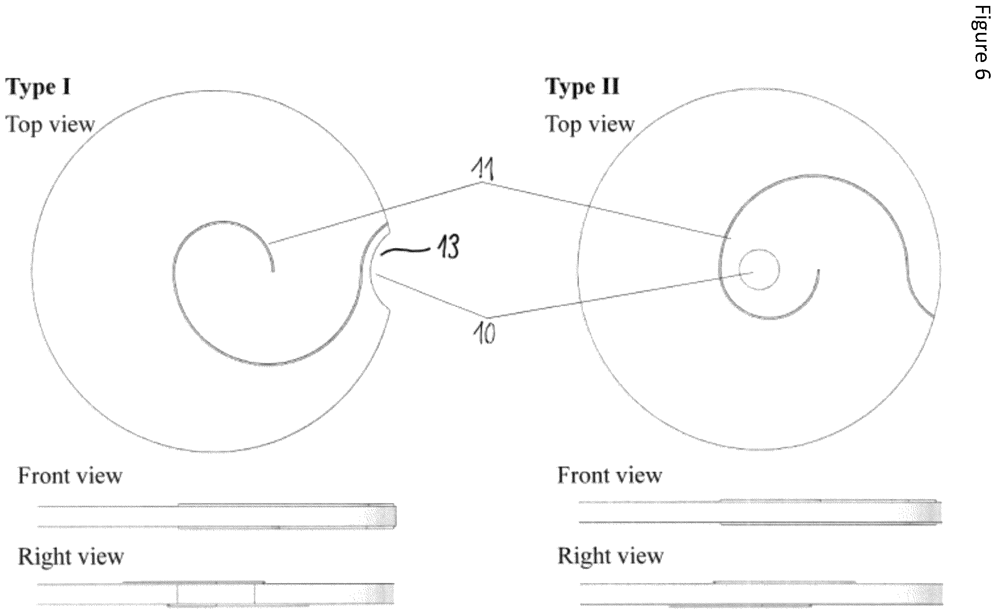

Figure 6 schematically shows a top view, front view and right view of containers comprising PCM material, in this case PCM discs. The PCM discs of type I and II can be used alternatingly in a stack and be integrated in a tank having a circular cross-section. Spiral spacers 11 in between the PCM discs separate the containers from each other and determine a first part of the flow path 10 of the water in the tank. The spirals force the water to flow around each entire PCM disc and use the entire available heat transfer area. Water can flow from the recess 13 of one container to the hole 12 of the neighboring container. Sections of the spiral spacers 11 can be perforated to avoid no-flow zones and improve heat transfer.

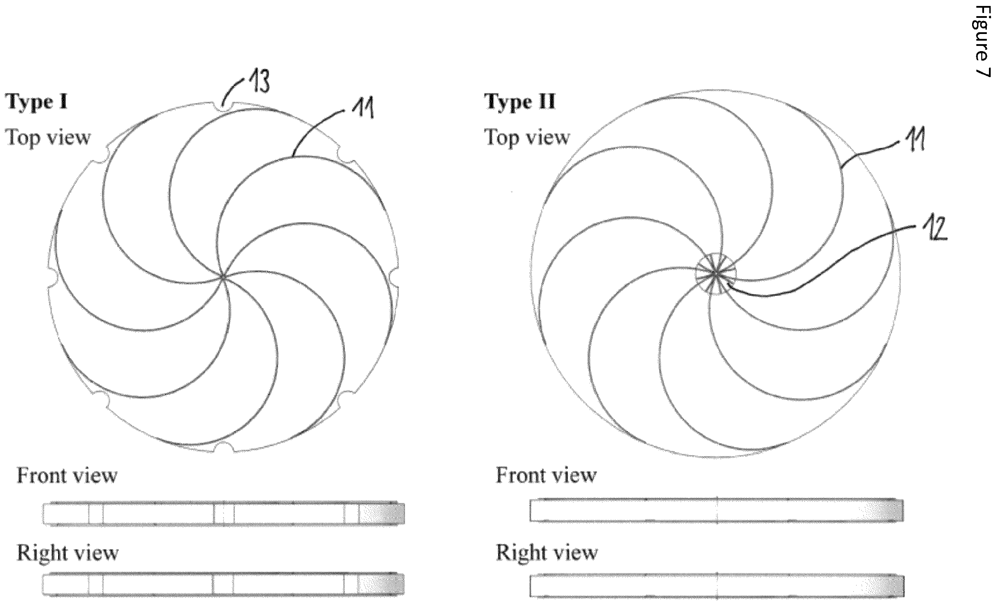

Figure 7 schematically shows a top view, front view and right view of further containers comprising PCM material, in this case PCM discs. The PCM discs of type I and II can be used alternatingly in a stack and be integrated in a tank having a circular cross-section. Spiral spacers 11 in between the PCM discs separate the containers from each other and determine a first part of the flow path 10 of the water in the tank. The spirals force the water to flow around each entire PCM disc and use the entire available heat transfer area. Water can flow from the recesses 13 of one container to the hole 12 of the neighboring container. Sections of the spiral spacers 11 can be perforated to avoid no-flow zones and improve heat transfer.

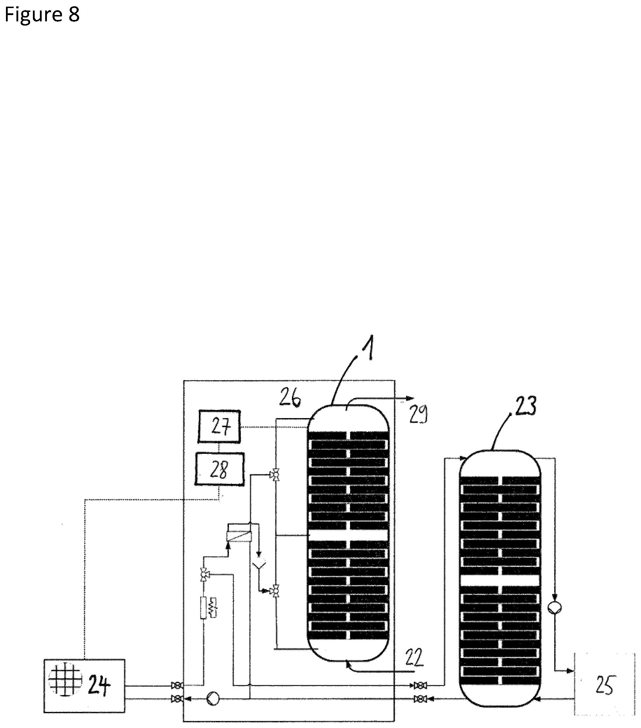

Figure 8 schematically shows a system according to the present invention. Here, the system comprises a first tank 1 of a thermal energy storage device according to the invention and a second tank 23 of a further thermal energy storage device according to the invention. In this case, the second tank 23 acts as a buffer tank for space heating. The PCM melting temperature can be selected at a suitable melting temperature for space heating. If different types of emitters are installed, the PCM can be split into different PCM zones as shown in Fig. 4, where each zone supplies the corresponding heat emitter type.

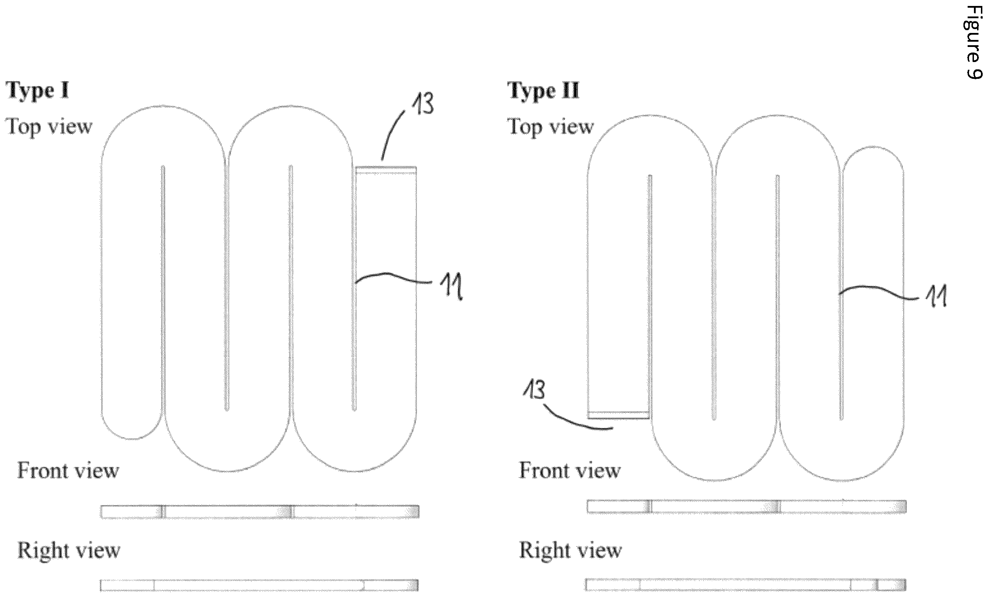

Figure 9 schematically shows a top view, front view and right view of further containers comprising PCM material, in this case serpentine PCM discs. The serpentine PCM discs of type I and II can be used alternatingly in a stack and be integrated in a tank having a rectangular cross-section. The spacers 11 in between the PCM discs separate the containers from each other and determine a first part of the flow path 10 of the water in the tank. The spacers 11 force the water to flow around each entire PCM disc and use the entire available heat transfer area. Water can flow from the recess 13 of one container to the recess 13 of the neighboring container.

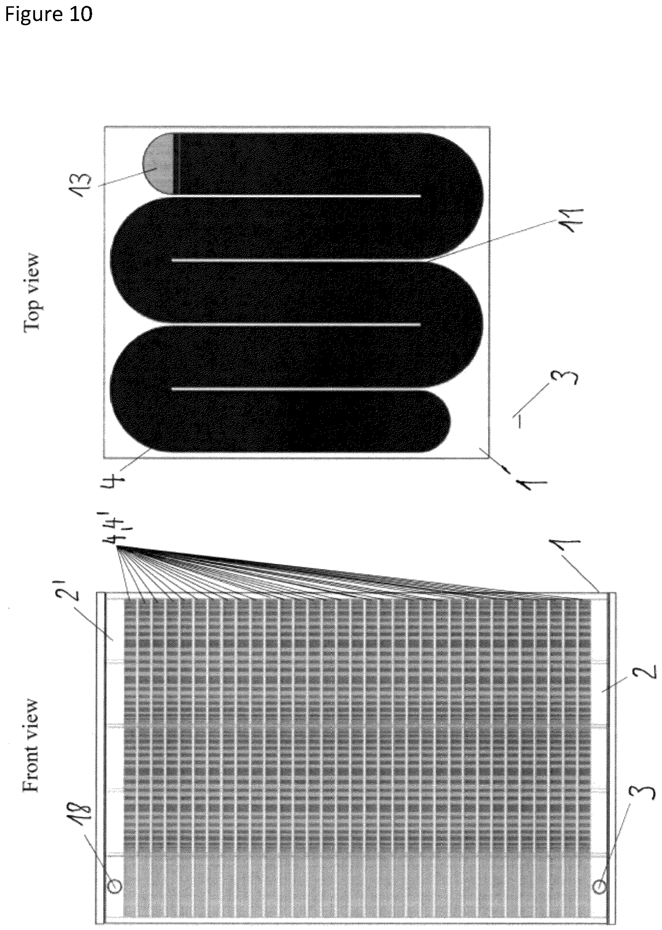

Figure 10 schematically shows a thermal energy storage device according to the invention. In this example, the serpentine PCM discs shown in Fig. 9 are stacked in a tank with a rectangular chassis to allow for a more compact design. Here, the spacers 11 (baffles) are integrated into the wall of the tank 1. The example shows that the tank 1 has at least one first opening 3 (inlet) and at least one second opening 18 (outlet), but additional charging pipe connections can be advantageous.

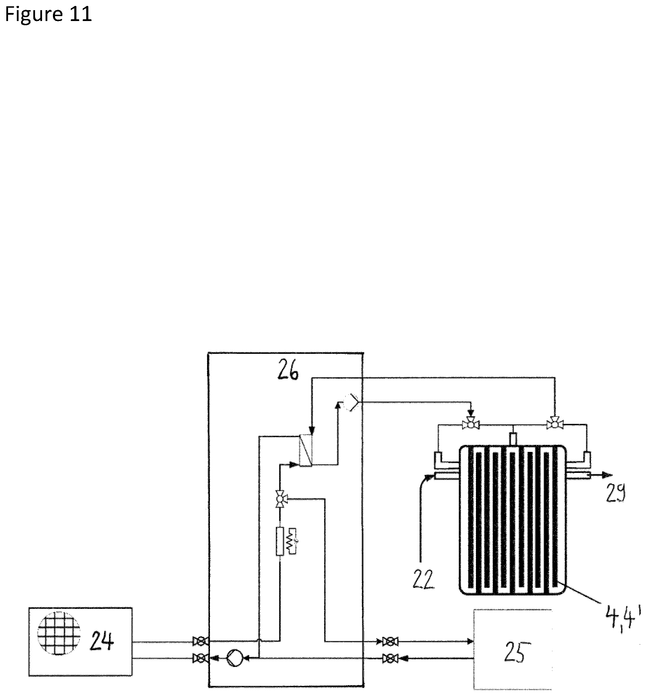

Figure 11 schematically shows a system according to the present invention. In this example, the system comprises a similar thermal energy storage device (TES) as shown in Fig. 10, but the containers 4, 4'are stacked in a direction parallel to the ground and not in a direction vertical to the ground (like in Fig. 10). Here, the system comprises an air-to-water heat pump as heat source 24, and an indoor unit 26, e.g. a Hydrobox unit. The thermal energy storage device can simultaneously be charged and discharged.

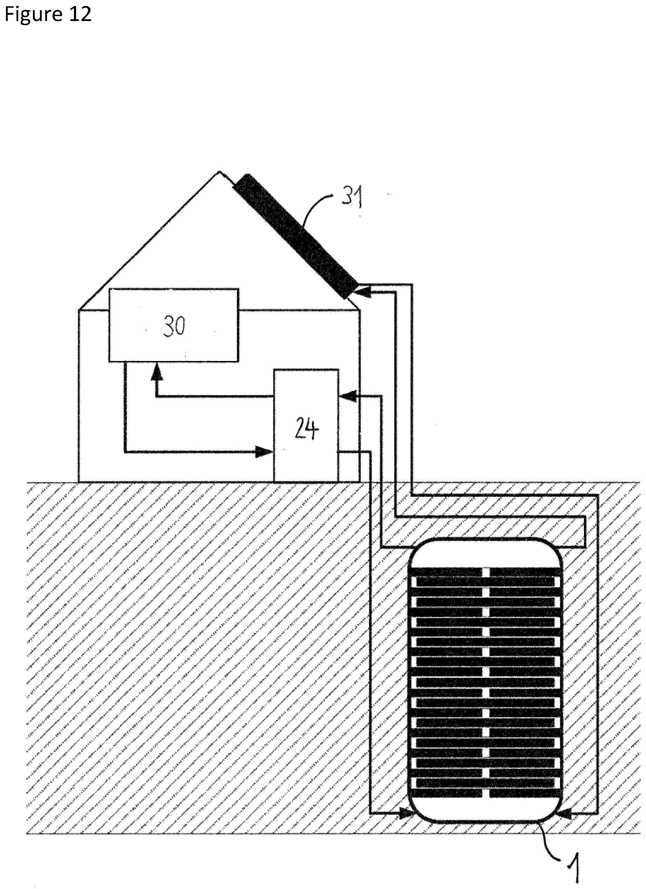

Figure 12 schematically shows a system according to the present invention. The tank 1 of the thermal energy storage device according to the invention is located underground outside of a building. The underground tank 1 supplies thermal energy to the heat pump 24 inside the building, wherein the system comprises a conventional DHW cylinder located in the building and further supplies energy for space heating and domestic hot water 30. A solar collector 31 is used to charge the thermal energy storage device during solar availability. A large tank 1 increases the energy saving time horizon up to inter-seasonal storage.

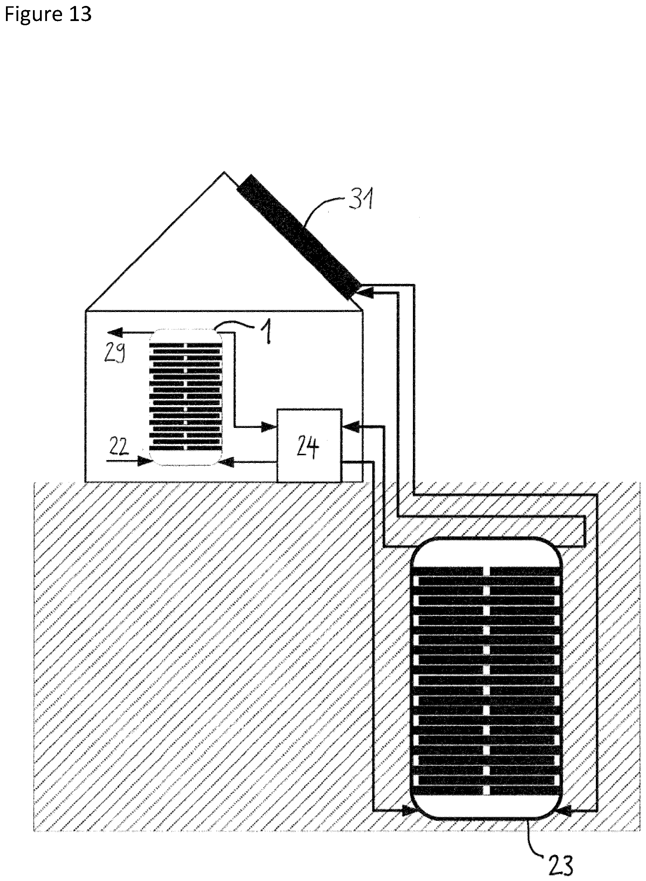

Figure 13 schematically shows a system according to the present invention. Here, the system comprises a water-to-water heat pump 24 using a large tank 23 of a thermal energy storage device according to the invention on the outside of a building, which supplies thermal energy to the heat pump 24. A smaller tank 1 of a thermal energy storage device according to the invention is located indoors and receives thermal output from the heat pump 24. In another advantageous embodiment, instead of being contained in the large tank 23 of a thermal energy storage device according to the invention, the containers containing PCM are integrated into the pipes of boreholes that are part of a ground source of the heat pump 24. The PCM adds additional heat storage and/or the possibility to store heat on the ground-borehole-side of the ground source heat pump 24 at a lower temperature level.

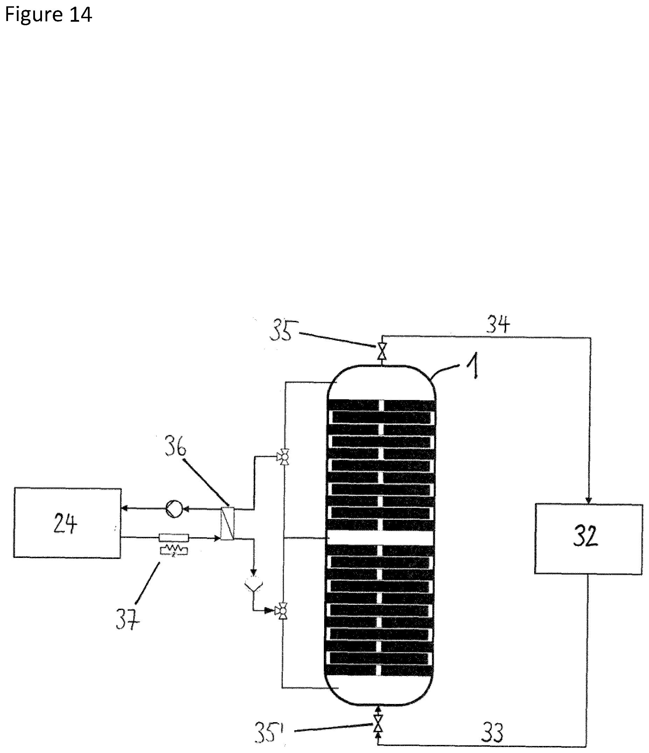

Figure 14 schematically shows a system according to the present invention. The tank 1 of the thermal energy storage device can be used in larger applications to generate steam for industrial processes. In this example, the TES is charged from a high temperature heat pump 24 as heat source. The TES comprises at least one type of suitable PCM temperature matching the steam requirements of the industrial process.

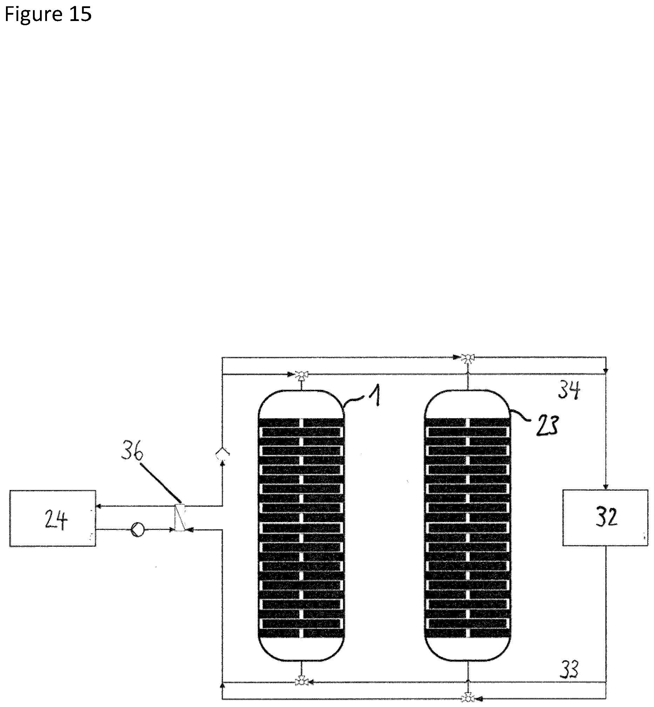

Figure 15 schematically shows a system according to the present invention. It can be beneficial to have two or more tanks of a thermal energy storage device according to the present invention, wherein the TES are operated in a semi-continuous batch process, where one TES can be charged, while the other TES can be discharged. Different heat sources 24 are also possible, e.g. a heat pump or waste heat from another process. For any heat source, the proposed design allows charging and discharging to occur at different pressures and temperatures.

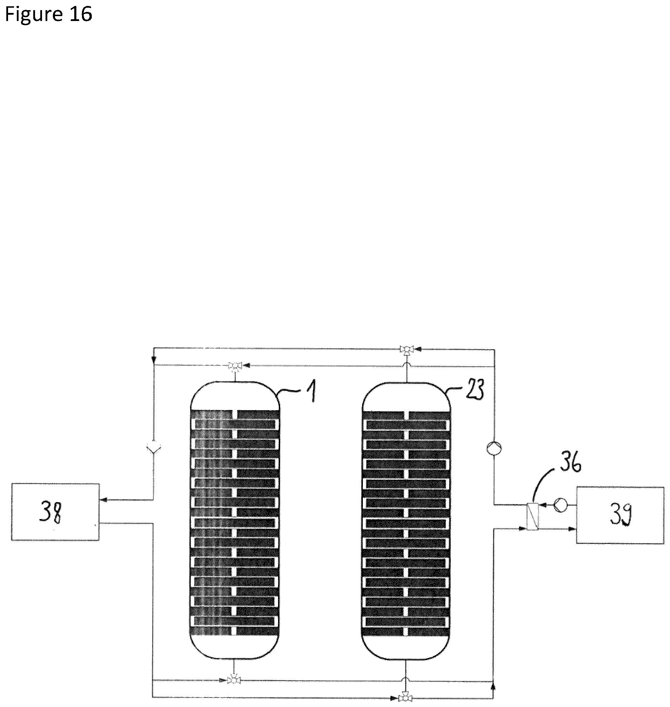

Figure 16 schematically shows a system according to the present invention. The system is also suitable for a cooling process. In the example shown here, the containers contain low temperature PCM, e.g. melting below ambient temperature. The system can again be operated with two TES in semi-continuous mode. Furthermore, the two TES can be connected to a chiller 38 and separated from the cooling application 39 with a heat exchanger 36. This enables different pressures and working fluids on both sides of the heat exchanger 36.

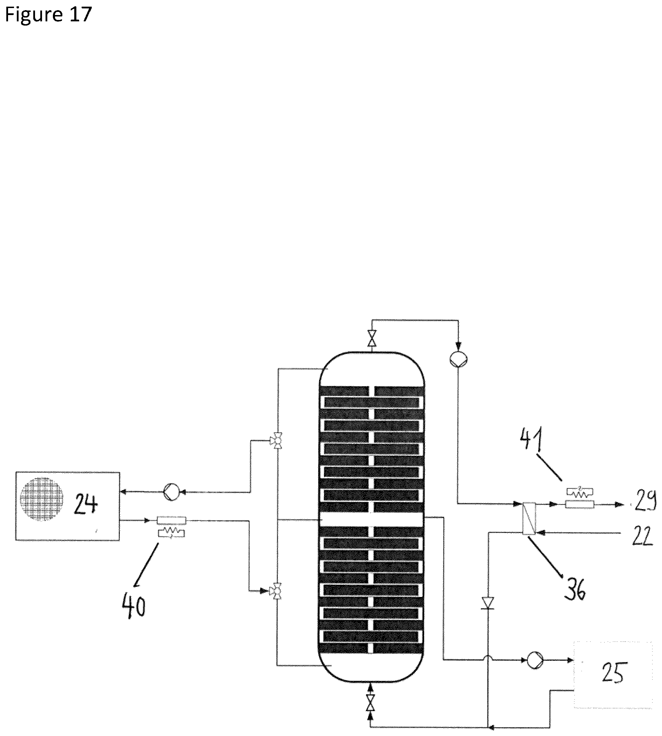

Figure 17 schematically shows a system according to the present invention. Here, the system comprises a tank 1 of a thermal energy storage device that is directly integrated into the heat pump 24 and heat emitter circuit 25. To provide DHW, hot fluid is extracted from the top of the tank 1 and used to preheat cold mains water from the cold mains water inlet 22 in an external heat exchanger 36, e.g. a plate heat exchanger. This arrangement would prevent any leaking phase change material to contaminate domestic hot water. Furthermore it is depicted in Figure 17 that the lower section of the containers (PCM discs) can be used as heat storage, preferably using PCM of lower melting temperatures < 45°C. Figure 17 also shows two beneficial locations of a first electrical booster heater 40 and a second electrical booster heater 41. Location 1, where the first electrical booster heater 40 is located, booster heat can be used to top-up heat from the heat pump 24, whereas the second electrical booster heater 41 in the location 2 can be activated when the DHW outlet temperature drops below and threshold to further extend the DHW output volume from the tank 1 and/or in peak demand times.

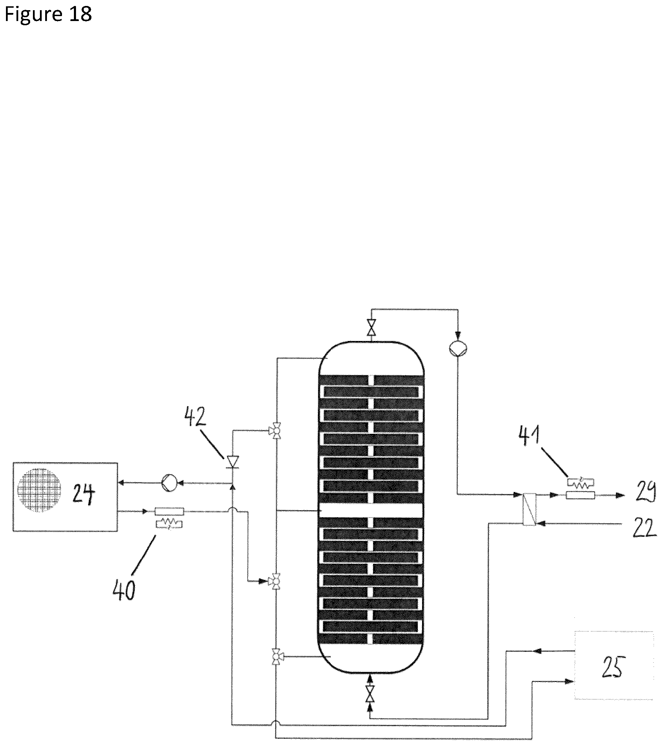

Figure 18 schematically shows a system according to the present invention, which is a modified version of Figure 17. Here, the tank 1 is still integrated into the heat emitter circuit 25 and heat pump fluid circuit, but the heat emitter circuit 25 is directly connected to the heat pump 24 (see e.g. direction of arrows and non-return valve 42) and the tank 1 is used as sole DHW TES.

### List of abbreviations and reference signs

- TES:: thermal energy storage device;
- PCM:: phase change material;
- 1:: tank of the TES;
- 2, 2':: internal space of the tank;
- 3:: at least one first opening of the tank (e.g. inlet for hot water);
- 4:: at least one first container (e.g. at least one first disc);
- 4':: at least one second container (e.g. at least one second disc);
- 5:: obverse wall of at least one container;
- 6:: reverse wall of at least one container;
- 7:: internal space of at least one container;
- 8:: cross-sectional center of at least one container;
- 9:: internal wall of the internal space of the tank;
- 10:: flow path for a fluid in the internal space of the tank;
- 11:: spacer (e.g. spiral or baffle);
- 12:: at least one hole of the at least one container;
- 13:: recess of the at least one container;
- 14:: first zone of containers;
- 15:: second zone of containers;
- 16:: third zone of containers;
- 17:: fourth zone of containers;
- 18:: at least one second opening of the tank (e.g. outlet for hot water);
- 19:: at least one third opening of the tank (e.g. connected to a heating circuit);
- 20:: at least one fourth opening of the tank (e.g. connected to a heating circuit);
- 21:: at least one fifth opening of the tank (e.g. connected to a heating circuit);
- 22:: mains water connection (mains inlet);
- 23:: tank of a further thermal energy storage device;
- 24:: heat source (e.g. heat pump).
- 25:: heat emitter circuit;
- 26:: system (e.g. indoor unit);
- 27:: SOC monitoring system;
- 28:: controller;
- 29:: DHW outlet;
- 30:: space heating and domestic hot water;
- 31:: solar collector/solar PVT
- 32:: steam process;
- 33:: feedwater (inlet);
- 34:: steam (outlet);
- 35:: valve to seal tank during charging;
- 35':: valve to seal tank during charging;
- 36:: heat exchanger;
- 37:: electrical steam generator;
- 38:: chiller;
- 39:: cooling application;
- 40:: first electrical booster heater;
- 41:: second electrical booster heater;
- 42:: non-return valve.

## Claims

1. Thermal energy storage device, comprising
a) a tank (1) having internal space (2, 2') and at least one first opening (3);
b) at least one container (4) and at least one further container (4'), wherein each of the at least two containers (4, 4') at least has an obverse wall (5), a reverse wall (6) and an internal space, wherein the internal space (7) of each of the at least two containers (4, 4') contains a phase change material (PCM), and wherein the obverse wall (5) and/or reverse wall (6) of the at least one container (4) has a substantially planar surface, wherein the substantially planar surface extends from a cross-sectional (8) centre of the at least one container (4) to at least one internal wall (9) of the internal space (2, 2') of the tank (1);
wherein the at least two containers (4, 4') are arranged in the internal space (2, 2') of the tank (1) above each other in a stack to define a flow path (10) for a fluid in the internal space (2, 2') of the tank (1);
wherein the flow path (10) allows a fluid to flow from the at least one first opening (3) of the tank (1) at least partially over a surface of the obverse wall (5) of the at least one container (4), then at least partially over a surface of the reverse wall (6) of the at least one container (4), then, one further container (4') in the stack after the other, at least partially over a surface of the obverse wall (5) and then at least partially over a surface of the reverse wall (6) of each further container (4') in the stack,
wherein the at least two containers (4, 4') are arranged in at least two zones (14, 15) in the internal space (2, 2') of the tank (1),
**characterized in that** the at least two containers (4, 4') comprise a phase change material (PCM) which has a melting point which is different between the zones (14, 15).

2. Thermal energy storage device according to the preceding claim,
wherein the thermal energy storage device comprises at least 20, more preferably at least 30, even more preferably at least 40, optionally at least 50, containers (4, 4'),
wherein each of the containers (4, 4') at least has an obverse wall (5), a reverse wall (6) and an internal space, wherein the internal space (7) of each of the containers (4, 4') contains a phase change material (PCM),
wherein the containers (4, 4') are arranged in the internal space (2, 2') of the tank (1) above each other in a stack to define a flow path (10) for a fluid in the internal space (2, 2') of the tank (1),
wherein the flow path (10) allows a fluid to flow from the at least one opening of the tank (1) at least partially over a surface of the obverse wall (5) of the at least one container (4), then at least partially over a surface of the reverse wall (6) of the at least one container (4), then, one further container (4') in the stack after the other, at least partially over a surface of the obverse wall (5) and then at least partially over a surface of the reverse wall (6) of each further container (4') in the stack.

3. Thermal energy storage device according to claim 2, **characterized in that** the thermal energy storage device comprises at least one spacer (11), preferably at least two spacers (11), more preferably at least four spacers (11), even more preferably at least six spacers (11), especially at least eight spacers (11), between each neighbouring pairs of containers (4, 4') to provide at least one first part of the flow path (10) for a fluid between each neighbouring pairs of containers (4, 4').

4. Thermal energy storage device according to claim 3, **characterized in that** the at least one spacer (11) provides an at least regionally nonlinear, preferably at least regionally circular, at least one first part of the flow path, wherein the at least one spacer (11) more preferably
i) is realized as a baffle, preferably as a spiral; and/or
ii) comprises perforated sections; and/or
iii) is connected to the at least one internal wall (9) of the internal space (2, 2') of the tank (1).

5. Thermal energy storage device according to one of claims 2 to 4, **characterized in that** a first (4) of the at least two containers (4, 4')comprises at least one hole (12) or at least one recess (13) and a second (4') of the at least two containers (4, 4') comprises at least one hole (12) or at least one recess (13), wherein the at least one hole (12) or recess (13) of the first (4) of the at least two containers (4, 4') and the at least one hole (12) or recess (13) of the second (4') of the at least two containers (4, 4') each provide at least one second part of the flow path (10) for a fluid, wherein preferably
i) the first (4) and second (4') of the at least two containers (4, 4') are neighbouring containers (4, 4') in the internal space (2, 2') of the tank (1), wherein the first (4) of the at least two containers (4, 4') is preferably located closer to the at least one first opening (3) of the tank (1) than the second (4') of the at least two containers (4, 4'); and/or
ii) the at least one second part of the flow path (10) for a fluid is essentially perpendicular to the at least one first part of the flow path (10) for a fluid; and/or
iii) the at least one hole (12) of the first (4) of the at least two containers (4, 4') is an eccentric hole (12) and/or the at least one hole (12) of the second (4') of the at least two containers (4, 4') is an eccentric hole (12);
iv) the at least one hole (12) or recess (13) of the first (4) of the at least two containers(4, 4') and the at least one hole (12) or recess (13) of the second (4') of the at least two containers (4, 4')are offset to each other in a direction perpendicular to the elongation of each of the at least one hole (12) or recess (13) through each of the at least two containers (4, 4'), preferably offset by at least half a length of each of the at least two containers (4, 4') in said direction.

6. Thermal energy storage device according to claim 5, **characterized in that**
i) the at least one hole (12) of the first (4) of the at least two containers (4, 4') is located at a cross-sectional centre (8) of the first (4) of the at least two containers (4, 4') and the at least one hole (12) or recess (13) of the second (4') of the at least two containers (4, 4')is located at an edge region of the second (4') of the at least two containers (4, 4'), wherein preferably the second (4') of the at least two containers (4, 4') comprises at least two, preferably at least four, more preferably at least six, even more preferably at least eight, holes (12) or recesses (13) located at an edge region of the second (4') of the at least two containers (4, 4'), wherein each pair of the at least two holes (12) or recesses (13) is preferably located at opposing ends of the second (4') of the at least two containers (4, 4'); and/or
ii) the at least one hole (12) of the second (4') of the at least two containers (4, 4') is located at a cross-sectional centre (8) of the first (4) of the at least two containers (4, 4') and the at least one hole (12) or recess (13) of the first (4) of the at least two containers (4, 4')is located at an edge region of the first (4) of the at least two containers (4, 4'), wherein preferably the first (4) of the at least two containers (4, 4') comprises at least two, preferably at least four, more preferably at least six, even more preferably at least eight, holes (12) or recesses (13) located at an edge region of the second (4') of the at least two containers (4, 4'), wherein each pair of the at least two recesses (13) or holes (12) is preferably located at opposing ends of the first (4) of the at least two containers (4, 4'); and/or
iii) the at least one recess (13) of the first (4) of the at least two containers (4, 4') is located at an edge region of the first (4) of the at least two containers (4, 4') and the at least one recess (13) of the second (4') of the at least two containers (4, 4')is located at an edge region of the second (4') of the at least two containers (4, 4'), wherein the at least one recess (13) of the first (4) of the at least two containers (4, 4') and the at least one recess (13) of the second (4') of the at least two containers (4, 4') are located at opposing ends of the internal space (2, 2') of the tank (1).

7. Thermal energy storage device according to one of the claims 2 to 6, **characterized in that** the at least 20, more preferably at least 30, even more preferably at least 40, optionally at least 50, containers (4, 4') are arranged in at least three zones (14, 15, 16), more preferably at least four zones (14, 15, 16, 17), in the internal space (2, 2') of the tank (1), wherein the containers (4, 4') preferably comprise a phase change material (PCM) which has a melting point which zonally increases or zonally decreases in an axial direction of the tank (1).

8. Thermal energy storage device according to one of the preceding claims, **characterized in that** the at least one container (4), optionally all containers (4, 4'), of the tank (1) has/have
i) a height in the range of 5 to 50 mm, wherein the height refers to a maximum dimension of the container (4, 4') from its obverse wall (5) to its reverse wall; and/or
ii) a length and width in the range of 80% to 100% of a length and width of a cross-section of the internal space (2, 2') of the tank (1); and/or
iii) an essentially circular cross-section, an essentially elliptical cross-section, an essentially triangular cross-section or an essentially rectangular cross-section, wherein the term "essentially" encompasses cross-sections regionally deviating from the mentioned cross-sections; and/or
iv) a substantially planar, preferably planar, obverse wall (5) surface and reverse wall (6) surface, wherein the term "substantially planar" includes a flat shape, a contoured shape, a locally interrupted shape and a shape with a hole (12); and/or
v) comprises a material selected from the group consisting of metal, plastic and combinations thereof, wherein preferably, the obverse wall (5) and/or the reverse wall, optionally also at least one side wall of the container (4, 4'), comprise or consist of a material selected from the group consisting of metal, plastic and combinations thereof.

9. Thermal energy storage device according to one of the preceding claims, **characterized in that** the at least one container (4), optionally all containers (4, 4')of the tank (1), occupy a volume the range of 60 to 95%, preferably in the range of 80 to 90%, of the total volume of the internal space (2, 2') of the tank (1).

10. Thermal energy storage device according to one of the preceding claims, **characterized in that** the tank (1) comprises
i) at least one second opening (18), preferably in a location opposite to the at least one first opening (3; and/or
ii) at least one third opening (19), preferably located in at least one side wall of the tank (1), more preferably in a region of the at least one side wall of the tank (1) closer to the at least one first opening (3) of the tank (1) than at least one second opening (18) of the tank (1); and/or
iii) at least one fourth opening (20), preferably located in at least one side wall of the tank (1), more preferably in a region of the at least one side wall of the tank (1) further away from the at least one first opening (3) of the tank (1) than at least one second opening (18) of the tank (1); and/or
iv) at least one fifth opening (21), preferably in at least one side wall of the tank (1), more preferably in a region of the at least one side wall of the tank (1) which has a substantially equal distance to the at least one first opening (3) of the tank (1) and at least one second opening (18) of the tank (1).

11. System (26), comprising
a) a thermal energy storage device according to one of the claims 1 to 10;
b) a mains water connection (22) which is thermally connected to the internal space (2, 2') of the tank (1) of the thermal energy storage device;
c) a heating circuit for charging the thermal energy storage device, wherein the heating circuit is thermally connected to the internal space (2, 2') of the tank (1) of the thermal energy storage device .

12. System (26) according to claim 11, **characterized in that** the phase change material (PCM) of the at least one container (4) has
i) a melting temperature in the range of 30 to <100°C wherein the thermal energy storage device is configured to provide heat to the heating circuit and is preferably located completely underground; and/or
ii) a melting temperature in the range of ≥100 °C, wherein the thermal energy storage device is configured to provide water in the form of steam (34).

13. System (26) according to one of claims 11 or 12, **characterized in that** the system further comprises a further thermal energy storage device according to one of the claims 1 to 10, wherein the tank (23) of the further thermal energy storage device preferably
i) comprises a mains water connection (22) which is thermally connected to the internal space (2, 2') of the tank (23) of the further thermal energy storage device, wherein the heating circuit is thermally connected to the internal space (2, 2') of the tank (1) of the further thermal energy storage device; and/or
ii) comprises a phase change material (PCM) in the at least one container (4) which has a melting temperature which is different to the melting temperature of the at least one container (4) of the thermal energy storage device; and/or
iii) comprises a phase change material (PCM) in the at least one container (4) which has a melting temperature in the range of 30 to <100°C, wherein the further thermal energy storage device is configured to provide heat to the heating circuit and is preferably located completely underground; and/or
iv) comprises a phase change material (PCM) in the at least one container (4) which has a melting temperature in the range of ≥100 °C, wherein the further thermal energy storage device is configured to provide water in the form of steam.

14. System (26) according to claim 13, **characterized in that** the system is configured to operate the thermal energy storage device and the further thermal energy storage device in a semi-continuous operation mode in which one of the thermal energy storage device and further thermal energy storage device is charged and the other one of the thermal energy storage device and further thermal energy storage device is discharged, wherein the system preferably comprises a controller (28) which is configured to control the semi-continuous operation mode.

15. System (26) according to one of claims 11 to 14, **characterized in that** the heating circuit comprises a heat source (24) which is selected from the group consisting of heat pump, solar thermal heater (31), gas boiler, industrial waste heat source and combinations thereof.

## Patentansprüche

1. Wärmeenergiespeichereinrichtung, umfassend:
a) einen Tank (1), aufweisend einen Innenraum (2, 2') und zumindest eine erste Öffnung (3);
b) zumindest einen Behälter (4) und zumindest einen weiteren Behälter (4'), wobei jeder der zumindest zwei Behälter (4, 4') zumindest eine Vorderwand (5), eine Rückwand (6) und einen Innenraum aufweist, wobei der Innenraum (7) jedes der zumindest zwei Behälter (4, 4') ein Phasenwechselmaterial (PCM) enthält, und wobei die Vorderwand (5) und/oder Rückwand (6) des zumindest einen Behälters (4) eine im Wesentlichen ebene Oberfläche aufweist, wobei sich die im Wesentlichen ebene Oberfläche von einem Querschnittszentrum (8) des zumindest einen Behälters (4) zu zumindest einer Innenwand (9) des Innenraums (2, 2') des Tanks (1) erstreckt;
wobei die zumindest zwei Behälter (4, 4') in dem Innenraum (2, 2') des Tanks (1) übereinander in einem Stapel angeordnet sind, um einen Strömungspfad (10) für ein Fluid in dem Innenraum (2, 2') des Tanks (1) zu definieren;
wobei der Strömungspfad (10) es einem Fluid ermöglicht, von der zumindest einen ersten Öffnung (3) des Tanks (1) zumindest teilweise über eine Oberfläche der Vorderwand (5) des zumindest einen Behälters (4), dann zumindest teilweise über eine Oberfläche der Rückwand (6) des zumindest einen Behälters (4), dann, einen weiteren Behälter (4') im Stapel nach den anderen, zumindest teilweise über eine Oberfläche der Vorderwand (5) und dann zumindest teilweise über eine Oberfläche der Rückwand (6) jedes weiteren Behälters (4') im Stapel zu strömen,
wobei die zumindest zwei Behälter (4, 4') in zumindest zwei Zonen (14, 15) im Innenraum (2, 2') des Tanks (1) angeordnet sind,
**dadurch gekennzeichnet, dass** die zumindest zwei Behälter (4, 4') ein Phasenwechselmaterial (PCM) enthalten, das einen Schmelzpunkt aufweist, der zwischen den Zonen (14, 15) unterscheidlich ist.

2. Wärmeenergiespeichereinrichtung nach dem vorangehenden Anspruch, wobei die Wärmeenergiespeichereinrichtung zumindest 20, weiter bevorzugt zumindest 30, noch weiter bevorzugt zumindest 40, optional zumindest 50, Behälter (4, 4') umfasst,
wobei jeder der Behälter (4, 4') zumindest eine Vorderwand (5), eine Rückwand (6) und einen Innenraum aufweist, wobei der Innenraum (7) jedes der Behälter (4, 4') ein Phasenwechselmaterial (PCM) enthält,
wobei die Behälter (4, 4') in dem Innenraum (2, 2') des Tanks (1) übereinander in einem Stapel angeordnet sind, um einen Strömungspfad (10) für ein Fluid in dem Innenraum (2, 2') des Tanks (1) zu definieren,
wobei der Strömungspfad (10) es einem Fluid ermöglicht, von der zumindest einen Öffnung des Tanks (1) zumindest teilweise über eine Oberfläche der Vorderwand (5) des zumindest einen Behälters (4), dann zumindest teilweise über eine Oberfläche der Rückwand (6) des zumindest einen Behälters (4), dann, einen weiteren Behälter (4') im Stapel nach den anderen, zumindest teilweise über eine Oberfläche der Vorderwand (5) und dann zumindest teilweise über eine Oberfläche der Rückwand (6) jedes weiteren Behälters (4') im Stapel zu strömen.

3. Wärmeenergiespeichereinrichtung nach Anspruch 2, **dadurch gekennzeichnet, dass** die Wärmeenergiespeichereinrichtung zumindest einen Abstandshalter (11), vorzugsweise zumindest zwei Abstandshalter (11), weiter bevorzugt zumindest vier Abstandshalter (11), noch weiter bevorzugt zumindest sechs Abstandshalter (11), insbesondere zumindest acht Abstandshalter (11), zwischen jedem benachbarten Paar von Behältern (4, 4') aufweist, um zumindest einen ersten Teil des Strömungspfads (10) für ein Fluid zwischen jedem benachbarten Paar von Behältern (4, 4') bereitzustellen.

4. Wärmeenergiespeichereinrichtung nach Anspruch 3, **dadurch gekennzeichnet, dass** der zumindest eine Abstandshalter (11) einen zumindest bereichsweise nichtlinearen, vorzugsweise zumindest bereichsweise kreisförmigen, zumindest einen ersten Teil des Strömungspfades bildet, wobei der zumindest eine Abstandshalter (11) vorzugsweise
i) als eine Ablenkplatte, vorzugsweise als eine Spirale, ausgeführt ist; und/oder
ii) perforierte Abschnitte umfasst; und/oder
iii) mit der zumindest einen Innenwand (9) des Innenraums (2, 2') des Tanks (1) verbunden ist.

5. Wärmeenergiespeichereinrichtung nach einem der Ansprüche 2 bis 4, **dadurch gekennzeichnet, dass** ein erster (4) der zumindest zwei Behälter (4, 4') zumindest ein Loch (12) oder zumindest eine Aussparung (13) aufweist und ein zweiter (4') der zumindest zwei Behälter (4, 4') zumindest ein Loch (12) oder zumindest eine Aussparung (13) aufweist, wobei das zumindest eine Loch (12) oder die zumindest eine Aussparung (13) des ersten (4) der zumindest zwei Behälter (4, 4') und das zumindest eine Loch (12) oder die zumindest eine Aussparung (13) des zweiten (4') der zumindest zwei Behälter (4, 4') jeweils zumindest einen zweiten Teil des Strömungspfades (10) für ein Fluid bereitstellen, wobei vorzugsweise
i) der erste (4) und zweite (4') der zumindest zwei Behälter (4, 4') benachbarte Behälter (4, 4') im Innenraum (2, 2') des Tanks (1) sind, wobei der erste (4) der zumindest zwei Behälter (4, 4') vorzugsweise näher an der zumindest einen ersten Öffnung (3) des Tanks (1) angeordnet ist als der zweite (4') der zumindest zwei Behälter (4, 4'); und/oder
ii) der zumindest eine zweite Teil des Strömungspfades (10) für ein Fluid im Wesentlichen senkrecht zu dem zumindest einen ersten Teil des Strömungspfades (10) für ein Fluid verläuft; und/oder
iii) das zumindest eine Loch (12) des ersten (4) der zumindest zwei Behälter (4, 4') ein exzentrisches Loch (12) ist und/oder das zumindest eine Loch (12) des zweiten (4') der zumindest zwei Behälter (4, 4') ein exzentrisches Loch (12) ist;
iv) das zumindest eine Loch (12) oder die zumindest eine Aussparung (13) des ersten (4) der zumindest zwei Behälter (4, 4') und das zumindest eine Loch (12) oder die zumindest eine Aussparung (13) des zweiten (4') der zumindest zwei Behälter (4, 4'), in einer Richtung senkrecht zur Erstreckung jedes des zumindest einen Lochs (12) oder der zumindest einen Aussparung (13) durch jeden der zumindest zwei Behälter (4, 4'), zueinander versetzt sind, vorzugsweise um zumindest eine halbe Länge jedes der zumindest zwei Behälter (4, 4') in dieser Richtung versetzt sind.

6. Wärmeenergiespeichereinrichtung nach Anspruch 5, **dadurch gekennzeichnet, dass**
i) das zumindest eine Loch (12) des ersten (4) der zumindest zwei Behälter (4, 4') sich in einem Querschnittszentrum (8) des ersten (4) der zumindest zwei Behälter (4, 4') befindet und das zumindest eine Loch (12) oder die Aussparung (13) des zweiten (4') der zumindest zwei Behälter (4, 4') sich in einem Randbereich des zweiten (4') der zumindest zwei Behälter (4, 4') befindet, wobei vorzugsweise der zweite (4') der zumindest zwei Behälter (4, 4') zumindest zwei, vorzugsweise zumindest vier, weiter bevorzugt zumindest sechs, noch weiter bevorzugt zumindest acht, Löcher (12) oder Aussparungen (13) aufweist, die sich in einem Randbereich des zweiten (4') der zumindest zwei Behälter (4, 4') befinden, wobei jedes Paar der zumindest zwei Löcher (12) oder Aussparungen (13) vorzugsweise an gegenüberliegenden Enden des zweiten (4') der zumindest zwei Behälter (4, 4') angeordnet ist; und/oder
ii) das zumindest eine Loch (12) des zweiten (4') der zumindest zwei Behälter (4, 4') sich in einem Querschnittszentrum (8) des ersten (4) der zumindest zwei Behälter (4, 4') befindet und das zumindest eine Loch (12) oder Aussparung (13) des ersten (4) der zumindest zwei Behälter (4, 4') sich in einem Randbereich des ersten (4) der zumindest zwei Behälter (4, 4') befindet, wobei vorzugsweise der erste (4) der zumindest zwei Behälter (4, 4') zumindest zwei, vorzugsweise zumindest vier, weiter bevorzugt zumindest sechs, noch weiter bevorzugt zumindest acht, Löcher (12) oder Aussparungen (13) aufweist, die sich in einem Randbereich des zweiten (4') der zumindest zwei Behälter (4, 4') befinden, wobei jedes Paar der zumindest zwei Aussparungen (13) oder Löcher (12) vorzugsweise an gegenüberliegenden Enden des ersten (4) der zumindest zwei Behälter (4, 4') angeordnet ist; und/oder
iii) die zumindest eine Aussparung (13) des ersten (4) der zumindest zwei Behälter (4, 4') sich in einem Randbereich des ersten (4) der zumindest zwei Behälter (4, 4') befindet und die zumindest eine Aussparung (13) des zweiten (4') der zumindest zwei Behälter (4, 4') sich in einem Randbereich des zweiten (4') der zumindest zwei Behälter (4, 4') befindet, wobei die zumindest eine Aussparung (13) des ersten (4) der mindestens zwei Behälter (4, 4') und die zumindest eine Aussparung (13) des zweiten (4') der zumindest zwei Behälter (4, 4') an gegenüberliegenden Enden des Innenraums (2, 2') des Tanks (1) angeordnet sind.

7. Wärmeenergiespeichereinrichtung nach einem der Ansprüche 2 bis 6, **dadurch gekennzeichnet, dass** die zumindest 20, weiter bevorzugt zumindest 30, noch weiter bevorzugt zumindest 40, optional zumindest 50, Behälter (4, 4') in zumindest drei Zonen (14, 15, 16), weiter bevorzugt zumindest vier Zonen (14, 15, 16, 17), im Innenraum (2, 2') des Tanks (1) angeordnet sind, wobei die Behälter (4, 4') vorzugsweise ein Phasenwechselmaterial (PCM) enthalten, das einen Schmelzpunkt aufweist, der in einer axialen Richtung des Tanks (1) zonal ansteigt oder zonal abfällt.

8. Wärmeenergiespeichereinrichtung nach einem der vorangehenden Ansprüche, **dadurch gekennzeichnet, dass** der zumindest eine Behälter (4), optional alle Behälter (4, 4'), des Tanks (1) aufweist/aufweisen:
i) eine Höhe im Bereich von 5 bis 50 mm, wobei sich die Höhe auf eine maximale Dimensionierung des Behälters (4, 4') von seiner Vorderwand (5) zu seiner Rückwand bezieht; und/oder
ii) eine Länge und Breite im Bereich von 80 % bis 100 % einer Länge und Breite eines Querschnitts des Innenraums (2, 2') des Tanks (1); und/oder
iii) einen im Wesentlichen kreisförmigen Querschnitt, einen im Wesentlichen elliptischen Querschnitt, einen im Wesentlichen dreieckigen Querschnitt oder einen im Wesentlichen rechteckigen Querschnitt, wobei der Begriff "im Wesentlichen" auch Querschnitte einschließt, die von den genannten Querschnitten bereichsweise abweichen; und/oder
iv) eine im Wesentlichen ebene, vorzugsweise ebene, Oberfläche der Vorderwand (5) und Oberfläche der Rückwand (6), wobei der Begriff "im Wesentlichen eben" eine flache Form, eine konturierte Form, eine lokal unterbrochene Form und eine Form mit einem Loch (12) umfasst; und/oder
v) ein Material enthält, das aus der Gruppe ausgewählt ist, die aus Metall, Kunststoff und Kombinationen davon besteht, wobei vorzugsweise die Vorderwand (5) und/oder die Rückwand, optional auch zumindest eine Seitenwand, des Behälters (4, 4'), ein Material enthält/enthalten oder daraus besteht/bestehen, das aus der Gruppe ausgewählt ist, die aus Metall, Kunststoff und Kombinationen davon besteht.

9. Wärmeenergiespeichereinrichtung nach einem der vorangehenden Ansprüche, **dadurch gekennzeichnet, dass** der zumindest eine Behälter (4), optional alle Behälter (4, 4') des Tanks (1), ein Volumen im Bereich von 60 bis 95 %, vorzugsweise im Bereich von 80 bis 90 %, des Gesamtvolumens des Innenraums (2, 2') des Tanks (1) einnehmen.

10. Wärmeenergiespeichereinrichtung nach einem der vorangehenden Ansprüche, **dadurch gekennzeichnet, dass** der Tank (1) umfasst:
i) zumindest eine zweite Öffnung (18), vorzugsweise an einer der zumindest einen ersten Öffnung (3) gegenüberliegenden Stelle; und/oder
ii) zumindest eine dritte Öffnung (19), die sich vorzugsweise in zumindest einer Seitenwand des Tanks (1), weiter bevorzugt in einem Bereich der zumindest einen Seitenwand des Tanks (1), der näher an der zumindest einen ersten Öffnung (3) des Tanks (1) liegt als die zumindest eine zweite Öffnung (18) des Tanks (1), befindet; und/oder
iii) zumindest eine vierte Öffnung (20), die sich vorzugsweise in zumindest einer Seitenwand des Tanks (1), weiter bevorzugt in einem Bereich der zumindest einen Seitenwand des Tanks (1), der weiter entfernt von der zumindest einen ersten Öffnung (3) des Tanks (1) liegt als die zumindest eine zweite Öffnung (18) des Tanks (1), befindet; und/oder
iv) zumindest eine fünfte Öffnung (21), die sich vorzugsweise in zumindest einer Seitenwand des Tanks (1), weiter bevorzugt in einem Bereich der zumindest einen Seitenwand des Tanks (1), die einen im Wesentlichen gleichen Abstand zu der zumindest einen ersten Öffnung (3) des Tanks (1) und der zumindest einen zweiten Öffnung (18) des Tanks (1) aufweist, befindet.

11. System (26), umfassend:
a) eine Wärmenergiespeichereinrichtung nach einem der Ansprüche 1 bis 10;
b) einen Leitungswasseranschluss (22), der mit dem Innenraum (2, 2') des Tanks (1) der Wärmeenergiespeichereinrichtung thermisch verbunden ist;
c) einen Heizkreislauf zum Aufladen der Wärmeenergiespeichereinrichtung, wobei der Heizkreislauf mit dem Innenraum (2, 2') des Tanks (1) der Wärmeenergiespeichereinrichtung thermisch verbunden ist.

12. System (26) nach Anspruch 11, **dadurch gekennzeichnet, dass** das Phasenwechselmaterial (PCM) des zumindest einen Behälters (4) aufweist:
i) eine Schmelztemperatur im Bereich von 30 bis <100°C, wobei die Wärmeenergiespeichereinrichtung eingerichtet ist, Wärme dem Heizkreislauf bereitzustellen, und vorzugsweise vollständig unterirdisch angeordnet ist; und/oder
ii) eine Schmelztemperatur im Bereich von ≥100 °C, wobei die Wärmeenergiespeichereinrichtung eingerichtet ist, Wasser in Form von Dampf (34) bereitzustellen.

13. System (26) nach einem der Ansprüche 11 bis 12, **dadurch gekennzeichnet, dass** das System ferner eine weitere Wärmeenergiespeichereinrichtung nach einem der Ansprüche 1 bis 10 umfasst, wobei der Tank (23) der weiteren Wärmeenergiespeichereinrichtung vorzugsweise
i) einen Leitungswasseranschluss (22) aufweist, der mit dem Innenraum (2, 2') des Tanks (23) der weiteren Wärmeenergiespeichereinrichtung thermisch verbunden ist, wobei der Heizkreislauf thermisch mit dem Innenraum (2, 2') des Tanks (1) der weiteren Wärmeenergiespeichereinrichtung thermisch verbunden ist; und/oder
ii) ein Phasenwechselmaterial (PCM) in dem zumindest einen Behälter (4) enthält, das eine Schmelztemperatur aufweist, die sich von der Schmelztemperatur des zumindest einen Behälters (4) der Wärmeenergiespeichereinrichtung unterscheidet; und/oder
iii) ein Phasenwechselmaterial (PCM) in dem zumindest einen Behälter (4) enthält, das eine Schmelztemperatur im Bereich von 30 bis <100°C aufweist, wobei die weitere Wärmeenergiespeichereinrichtung eingerichtet ist, dem Heizkreislauf Wärme bereitzustellen, und vorzugsweise vollständig unterirdisch angeordnet ist; und/oder
iv) ein Phasenwechselmaterial (PCM) in dem zumindest einen Behälter (4) enthält, das eine Schmelztemperatur im Bereich von ≥100 °C aufweist, wobei die weitere Wärmeenergiespeichereinrichtung eingerichtet ist, von Wasser in Form von Dampf bereitzustellen.

14. System (26) nach Anspruch 13, **dadurch gekennzeichnet, dass** das System eingerichtet ist, die Wärmeenergiespeichereinrichtung und die weitere Wärmeenergiespeichereinrichtung in einem halbkontinuierlichen Betriebsmodus zu betreiben, in dem eine von der Wärmeenergiespeichereinrichtung und der weiteren Wärmeenergiespeichereinrichtung aufgeladen wird, und die andere von der Wärmeenergiespeichervorrichtung und der weiteren Wärmeenergiespeichervorrichtung entladen wird, wobei das System vorzugsweise eine Steuereinheit (28) umfasst, die ausgelegt ist, den halbkontinuierlichen Betriebsmodus zu steuern.

15. System (26) nach einem der Ansprüche 11 bis 14,**dadurch gekennzeichnet, dass** der Heizkreislauf eine Wärmequelle (24) umfasst, die aus der Gruppe ausgewählt ist, die aus einer Wärmepumpe, einem solarthermischen Heizer (31), einem Gasheizkessel, einer industriellen Abwärmequelle und Kombinationen davon besteht.

## Revendications

1. Dispositif de stockage d'énergie thermique, comprenant
a) un réservoir (1) présentant un espace interne (2, 2') et au moins une première ouverture (3) ;
b) au moins un contenant (4) et au moins un contenant supplémentaire (4'), dans lequel chacun des au moins deux contenants (4, 4') présente au moins une paroi recto (5), une paroi verso (6) et un espace interne, dans lequel l'espace interne (7) de chacun des au moins deux contenants (4, 4') contient un matériau à changement de phase (MCP), et dans lequel la paroi recto (5) et/ou la paroi verso (6) du au moins un contenant (4) présente une surface sensiblement plane, dans lequel la surface sensiblement plane s'étend depuis un centre de section transversale (8) du au moins un contenant (4) jusqu'à au moins une paroi interne (9) de l'espace interne (2, 2') du réservoir (1) ;
dans lequel les au moins deux contenants (4, 4') sont agencés dans l'espace interne (2, 2') du réservoir (1) l'un au-dessus de l'autre en un empilement pour définir un trajet d'écoulement (10) destiné à un fluide dans l'espace interne (2, 2') du réservoir (1) ;
dans lequel le trajet d'écoulement (10) permet à un fluide de s'écouler depuis la au moins une première ouverture (3) du réservoir (1) au moins partiellement sur une surface de la paroi recto (5) du au moins un contenant (4), puis au moins partiellement sur une surface de la paroi verso (6) du au moins un contenant (4), puis, un contenant supplémentaire (4') dans l'empilement après l'autre, au moins partiellement sur une surface de la paroi recto (5), puis au moins partiellement sur une surface de la paroi verso (6) de chaque contenant supplémentaire (4') dans l'empilement,
dans lequel les au moins deux contenants (4, 4') sont agencés dans au moins deux zones (14, 15) dans l'espace interne (2, 2') du réservoir (1),
**caractérisé en ce que** les au moins deux contenants (4, 4') comprennent un matériau à changement de phase (MCP) qui présente un point de fusion qui est différent entre les zones (14, 15).

2. Dispositif de stockage d'énergie thermique selon la revendication précédente, dans lequel le dispositif de stockage d'énergie thermique comprend au moins 20, de préférence au moins 30, de manière encore plus préférée au moins 40, facultativement au moins 50 contenants (4, 4'),
dans lequel chacun des contenants (4, 4') présente au moins une paroi recto (5), une paroi verso (6) et un espace interne, dans lequel l'espace interne (7) de chacun des contenants (4, 4') contient un matériau à changement de phase (MCP),
dans lequel les contenants (4, 4') sont agencés dans l'espace interne (2, 2') du réservoir (1) l'un au-dessus de l'autre en un empilement pour définir un trajet d'écoulement (10) destiné à un fluide dans l'espace interne (2, 2') du réservoir (1),
dans lequel le trajet d'écoulement (10) permet à un fluide de s'écouler depuis la au moins une ouverture du réservoir (1) au moins partiellement sur une surface de la paroi recto (5) du au moins un contenant (4), puis au moins partiellement sur une surface de la paroi verso (6) du au moins un contenant (4), puis, un contenant supplémentaire (4') dans l'empilement après l'autre, au moins partiellement sur une surface de la paroi recto (5), puis au moins partiellement sur une surface de la paroi verso (6) de chaque contenant supplémentaire (4') dans l'empilement.

3. Dispositif de stockage d'énergie thermique selon la revendication 2, **caractérisé en ce que** le dispositif de stockage d'énergie thermique comprend au moins une entretoise (11), de préférence au moins deux entretoises (11), de manière préférée au moins quatre entretoises (11), de manière encore plus préférée au moins six entretoises (11), en particulier au moins huit entretoises (11), entre chaque paire voisine de contenants (4, 4') pour fournir au moins une première partie du trajet d'écoulement (10) destiné à un fluide entre chaque paire voisine de contenants (4, 4').

4. Dispositif de stockage d'énergie thermique selon la revendication 3, **caractérisé en ce que** la au moins une entretoise (11) fournit une au moins une première partie du trajet d'écoulement au moins non linéaire au niveau régional, de préférence au moins circulaire au niveau régional, dans lequel la au moins une entretoise (11) est de manière encore plus préférée
i) réalisée sous la forme d'un déflecteur, de préférence sous la forme d'une spirale ; et/ou
ii) comprend des sections perforées ; et/ou
iii) est reliée à la au moins une paroi interne (9) de l'espace interne (2, 2') du réservoir (1).

5. Dispositif de stockage d'énergie thermique selon l'une quelconque des revendications 2 à 4, **caractérisé en ce qu'**un premier (4) des au moins deux contenants (4, 4') comprend au moins un trou (12) ou au moins un évidement (13) et un second (4') des au moins deux contenants (4, 4') comprend au moins un trou (12) ou au moins un évidement (13), dans lequel le au moins un trou (12) ou évidement (13) du premier (4) des au moins deux contenants (4, 4') et le au moins un trou (12) ou évidement (13) du second (4') des au moins deux contenants (4, 4') fournissent chacun au moins une seconde partie du trajet d'écoulement (10) destiné à un fluide, dans lequel, de préférence
i) le premier (4) et le second (4') des au moins deux contenants (4, 4') sont des contenants voisins (4, 4') dans l'espace interne (2, 2') du réservoir (1), dans lequel le premier (4) des au moins deux contenants (4, 4') est de préférence situé plus près de la au moins une première ouverture (3) du réservoir (1) que le second (4') des au moins deux contenants (4, 4') ; et/ou
ii) la au moins une seconde partie du trajet d'écoulement (10) destiné à un fluide est sensiblement perpendiculaire à la au moins une première partie du trajet d'écoulement (10) destiné à un fluide ; et/ou
iii) le au moins un trou (12) du premier (4) des au moins deux contenants (4, 4') est un trou excentrique (12) et/ou le au moins un trou (12) du second (4') des au moins deux contenants (4, 4') est un trou excentrique (12) ;
iv) le au moins un trou (12) ou évidement (13) du premier (4) des au moins deux contenants (4, 4') et le au moins un trou (12) ou évidement (13) du second (4') des au moins deux contenants (4, 4') sont décalés l'un par rapport à l'autre dans une direction perpendiculaire à l'allongement de chacun du au moins un trou (12) ou évidement (13) à travers chacun des au moins deux contenants (4, 4'), de préférence décalés d'au moins la moitié d'une longueur de chacun des au moins deux contenants (4, 4') dans ladite direction.

6. Dispositif de stockage d'énergie thermique selon la revendication 5, **caractérisé en ce que**
i) le au moins un trou (12) du premier (4) des au moins deux contenants (4, 4') est situé au niveau d'un centre de section transversale (8) du premier (4) des au moins deux contenants (4, 4') et le au moins un trou (12) ou évidement (13) du second (4') des au moins deux contenants (4, 4') est situé au niveau d'une région de bord du second (4') des au moins deux contenants (4, 4'), dans lequel de préférence le second (4') des au moins deux contenants (4, 4') comprend au moins deux, de préférence au moins quatre, de manière plus préférée au moins six, de manière encore plus préférée au moins huit trous (12) ou évidements (13) situés au niveau d'une région de bord du second (4') des au moins deux contenants (4, 4'), dans lequel chaque paire des au moins deux trous (12) ou évidements (13) est de préférence située à des extrémités opposées du second (4') des au moins deux contenants (4, 4') ; et/ou
ii) le au moins un trou (12) du second (4') des au moins deux contenants (4, 4') est situé au niveau d'un centre de section transversale (8) du premier (4) des au moins deux contenants (4, 4') et le au moins un trou (12) ou évidement (13) du premier (4) des au moins deux contenants (4, 4') est situé au niveau d'une région de bord du premier (4) des au moins deux contenants (4, 4'), dans lequel de préférence le premier (4) des au moins deux contenants (4, 4') comprend au moins deux, de préférence au moins quatre, de manière plus préférée au moins six, de manière encore plus préférée au moins huit trous (12) ou évidements (13) situés au niveau d'une région de bord du second (4') des au moins deux contenants (4, 4'), dans lequel chaque paire des au moins deux évidements (13) ou trous (12) est de préférence située à des extrémités opposées du premier (4) des au moins deux contenants (4, 4') ; et/ou
iii) le au moins un évidement (13) du premier (4) des au moins deux contenants (4, 4') est situé au niveau d'une région de bord du premier (4) des au moins deux contenants (4, 4') et le au moins un évidement (13) du second (4') des au moins deux contenants (4, 4') est situé au niveau d'une région de bord du second (4') des au moins deux contenants (4, 4'), dans lequel le au moins un évidement (13) du premier (4) des au moins deux contenants (4, 4') et le au moins un évidement (13) du second (4') des au moins deux contenants (4, 4') sont situés à des extrémités opposées de l'espace interne (2, 2') du réservoir (1).

7. Dispositif de stockage d'énergie thermique selon l'une quelconque des revendications 2 à 6, **caractérisé en ce que** les au moins 20, de manière plus préférée au moins 30, de manière encore plus préférée au moins 40, facultativement au moins 50 contenants (4, 4') sont agencés dans au moins trois zones (14, 15, 16), de manière plus préférée au moins quatre zones (14, 15, 16, 17), dans l'espace interne (2, 2') du réservoir (1), dans lequel les contenants (4, 4') comprennent de préférence un matériau à changement de phase (MCP) qui présente un point de fusion qui augmente ou diminue par zones dans une direction axiale du réservoir (1).

8. Dispositif de stockage d'énergie thermique selon l'une quelconque des revendications précédentes, **caractérisé en ce que** le au moins un contenant (4), facultativement tous les contenants (4, 4') du réservoir (1) présentent
i) une hauteur dans la plage de 5 à 50 mm, dans lequel la hauteur se réfère à une dimension maximale du contenant (4, 4') de sa paroi recto (5) à sa paroi verso ; et/ou
ii) une longueur et une largeur dans la plage de 80 % à 100 % d'une longueur et d'une largeur d'une section transversale de l'espace interne (2, 2') du réservoir (1) ; et/ou
iii) une section transversale sensiblement circulaire, une section transversale sensiblement elliptique, une section transversale sensiblement triangulaire ou une section transversale sensiblement rectangulaire, dans lequel le terme « sensiblement » englobe des sections transversales s'écartant par régions des sections transversales mentionnées ; et/ou
iv) une surface de paroi recto (5) sensiblement plane, de préférence plane, et une surface de paroi verso (6), dans lequel l'expression « sensiblement plane » inclut une forme plate, une forme profilée, une forme localement interrompue et une forme avec un trou (12) ; et/ou
v) comprend un matériau choisi dans le groupe comprenant du métal, du plastique et des combinaisons de ceux-ci, dans lequel de préférence, la paroi recto (5) et/ou la paroi verso, facultativement également au moins une paroi latérale du contenant (4, 4'), comprennent ou consistent en un matériau choisi dans le groupe comprenant du métal, du plastique et des combinaisons de ceux-ci.

9. Dispositif de stockage d'énergie thermique selon l'une quelconque des revendications précédentes, **caractérisé en ce que** le au moins un contenant (4), facultativement tous les contenants (4, 4') du réservoir (1), occupent un volume dans la plage de 60 à 95 %, de préférence dans la plage de 80 à 90 %, du volume total de l'espace interne (2, 2') du réservoir (1).

10. Dispositif de stockage d'énergie thermique selon l'une quelconque des revendications précédentes, **caractérisé en ce que** le réservoir (1) comprend
i) au moins une deuxième ouverture (18), de préférence dans un emplacement opposé à la au moins une première ouverture (3) ; et/ou
ii) au moins une troisième ouverture (19), de préférence située dans au moins une paroi latérale du réservoir (1), de manière plus préférée dans une région de la au moins une paroi latérale du réservoir (1) plus proche de la au moins une première ouverture (3) du réservoir (1) qu'au moins une deuxième ouverture (18) du réservoir (1) ; et/ou
iii) au moins une quatrième ouverture (20), de préférence située dans au moins une paroi latérale du réservoir (1), de manière plus préférée dans une région de la au moins une paroi latérale du réservoir (1) plus éloignée de la au moins une première ouverture (3) du réservoir (1) qu'au moins une deuxième ouverture (18) du réservoir (1) ; et/ou
iv) au moins une cinquième ouverture (21), de préférence dans au moins une paroi latérale du réservoir (1), de manière plus préférée dans une région de la au moins une paroi latérale du réservoir (1) qui présente une distance sensiblement égale à la au moins une première ouverture (3) du réservoir (1) et à la au moins une deuxième ouverture (18) du réservoir (1).

11. Système (26), comprenant
a) un dispositif de stockage d'énergie thermique selon l'une quelconque des revendications 1 à 10 ;
b) un raccordement d'eau de réseau (22) qui est raccordé thermiquement à l'espace interne (2, 2') du réservoir (1) du dispositif de stockage d'énergie thermique ;
c) un circuit de chauffage pour charger le dispositif de stockage d'énergie thermique, dans lequel le circuit de chauffage est raccordé thermiquement à l'espace interne (2, 2') du réservoir (1) du dispositif de stockage d'énergie thermique.

12. Système (26) selon la revendication 11, **caractérisé en ce que** le matériau à changement de phase (MCP) du au moins un contenant (4) présente
i) une température de fusion dans la plage de 30 à < 100°C, dans lequel le dispositif de stockage d'énergie thermique est configuré pour fournir de la chaleur au circuit de chauffage et est de préférence situé complètement sous terre ; et/ou
ii) une température de fusion dans la plage de ≥ 100°C, dans lequel le dispositif de stockage d'énergie thermique est configuré pour fournir de l'eau sous la forme de vapeur (34).

13. Système (26) selon l'une quelconque des revendications 11 ou 12, **caractérisé en ce que** le système comprend en outre un dispositif de stockage d'énergie thermique supplémentaire selon l'une des revendications 1 à 10, dans lequel le réservoir (23) du dispositif de stockage d'énergie thermique supplémentaire
i) comprend préférablement un raccordement d'eau de réseau (22) qui est raccordé thermiquement à l'espace interne (2, 2') du réservoir (23) du dispositif de stockage d'énergie thermique supplémentaire, dans lequel le circuit de chauffage est raccordé thermiquement à l'espace interne (2, 2') du réservoir (1) du dispositif de stockage d'énergie thermique supplémentaire ; et/ou
ii) comprend préférablement un matériau à changement de phase (MCP) dans le au moins un contenant (4) qui présente une température de fusion qui est différente de la température de fusion du au moins un contenant (4) du dispositif de stockage d'énergie thermique ; et/ou
iii) comprend préférablement un matériau à changement de phase (MCP) dans le au moins un contenant (4) qui présente une température de fusion dans la plage de 30 à < 100°C, dans lequel le dispositif de stockage d'énergie thermique supplémentaire est conçu pour fournir de la chaleur au circuit de chauffage et est de préférence situé complètement sous terre ; et/ou
iv) comprend un matériau à changement de phase (MCP) dans le au moins un contenant (4) qui présente une température de fusion dans la plage de ≥ 100°C, dans lequel le dispositif de stockage d'énergie thermique supplémentaire est configuré pour fournir de l'eau sous la forme de vapeur.

14. Système (26) selon la revendication 13, **caractérisé en ce que** le système est configuré pour faire fonctionner le dispositif de stockage d'énergie thermique et le dispositif de stockage d'énergie thermique supplémentaire dans un mode de fonctionnement semi-continu dans lequel un certain du dispositif de stockage d'énergie thermique et du dispositif de stockage d'énergie thermique supplémentaire est chargé et l'autre du dispositif de stockage d'énergie thermique et du dispositif de stockage d'énergie thermique supplémentaire est déchargé, dans lequel le système comprend de préférence un dispositif de commande (28) qui est configuré pour commander le mode de fonctionnement semi-continu.

15. Système (26) selon l'une quelconque des revendications 11 à 14, **caractérisé en ce que** le circuit de chauffage comprend une source de chaleur (24) qui est sélectionnée dans le groupe constitué d'une pompe à chaleur, d'un dispositif de chauffage thermique solaire (31), d'une chaudière à gaz, d'une source de chaleur résiduelle industrielle et de combinaisons de ceux-ci.
